# FASCICULE DE BREVET EUROPEEN

(11) **EP 3 700 329 B1**
(45) Date de publication et mention de la délivrance du brevet: **04.12.2024**
(21) Numéro de dépôt: 18779411.0
(22) Date de dépôt: 05.10.2018
(51) Int. Cl.: A01K 61/54, A01K 61/55

(54) **DISPOSITIF D'ÉLEVAGE EN MER DE COQUILLAGES**
VORRICHTUNG ZUR AUFZUCHT VON KRUSTENTIEREN AUF DEM MEER
DEVICE FOR REARING SHELLFISH AT SEA

(30) Priorité: 27.10.2017 FR 1760133
(43) Date de publication de la demande: 02.09.2020
(73) Titulaire: Genocean, 17410 Saint-Martin-de-Ré (FR)
(72) Inventeur: MARISSAL, Eric, 17410 Saint-Martin-de-Re (FR); PINCOT, Lila, 17630 La Flotte (FR)
(74) Mandataire: Lavoix
(86) Numéro de dépôt international: PCT/EP2018/077212
(87) Numéro de publication internationale: WO 2019/081184

(56) Documents cités:
- EP-A1- 0 681 783
- WO-A1-2018/215517
- FR-A1- 2 576 484
- FR-A1- 2 845 865
- FR-A1- 2 908 013
- FR-A1- 2 996 410
- FR-A1- 3 003 128

## Description

L'invention concerne en général les dispositifs d'élevage en mer de coquillages et plus particulièrement les huîtres.

Dans la majorité des pays ostréicoles, les huîtres sont consommées décoquillées. Elles sont cuites avant d'être consommées. En France, et dans d'autres pays, les huîtres sont consommées vivantes dans leur coquille. Ces deux modes de consommation différents ont concouru à deux types de mode d'élevage distincts. En effet la consommation crue dans la coquille exige une qualité irréprochable de la forme de celle-ci, une importance moindre étant accordée à la qualité de la chair. Pour la consommation de la chair décoquillée aucune importance n'est accordée à la forme de l'huître.

Ainsi, dans la consommation décoquillée, le consommateur exige un poisson très charnu, susceptible de conserver un certain volume et une certaine texture après cuisson, comme pour les moules. Dans l'immense majorité des cas, les huîtres sont alors élevées en eau libre, collées sur leur support d'origine jusqu'à une taille et jusqu'à un âge suffisants. Elles sont récoltées à des périodes adéquates pour que la quantité de chair et la qualité d'engraissement soient conformes aux attentes du consommateur.

Dans le cas d'huîtres consommées crues dans leurs coquilles, la zootechnie s'est orientée vers l'élevage des huîtres une-à-une, dans des enceintes susceptibles d'être secouées régulièrement pour éviter qu'elles ne se recollent entre elles.

Afin de permettre ces manipulations, les zones d'élevage sont délimitées exclusivement dans la zone intertidale permettant l'accès à marée basse du personnel chargé du brassage des enceintes. Ces enceintes sont en général des poches en maillage plastique, posées sur des tables en barres d'acier ancrées sur la plage. Ainsi concentrées et manipulées, les huîtres assurent correctement leur croissance, mais n'atteignent que très rarement une qualité de chair équivalente à ce que recherche le consommateur averti, habitué à consommer les huîtres décoquillées.

La zone découvrante, c'est-à-dire la zone intertidale, est caractérisée par la force des vagues, fonction elle-même de l'exposition du littoral concerné au vent et à la houle du large. Sur de rares sites, il est ainsi possible, du fait d'un brassage particulièrement puissant et régulier par les vagues, d'obtenir non seulement des huîtres suffisamment roulées dans les poches d'élevage pour que leurs coquilles soient érodées, arrondies et bien creuses, mais aussi un taux de chair exceptionnel. Ces huîtres sont qualifiées de « super spéciales ». Le phénomène mis en jeu est simple : l'huître quand sa capacité alimentaire est satisfaite, privilégie toujours jusqu'à un certain âge (3 ans) l'affectation de l'énergie à la croissance coquillière au détriment de l'engraissement. Sur les sites fortement exposés aux vagues, le fait que les coquilles sont roulées dans les enceintes d'élevage très régulièrement lors de la marée descendante, quand les enceintes émergent dans les vagues, permet de briser en partie la croissance coquillière journalière et d'obliger l'animal à favoriser une croissance de la coquille en épaisseur, plus lente, mais garante d'une forme creuse et arrondie. Cette opération serait impossible à réaliser à la main pour des raisons de durée d'intervention à marée basse, compte-tenu du temps nécessaire au personnel pour la réaliser sur de grandes surfaces d'élevage.

Dans le même temps, la proportion d'énergie non affectée à la croissance coquillière est réorientée vers l'engraissement, favorisant ainsi un taux de chair très élevé, caractérisé par la qualité de « super spéciale ».

Cette qualité peut être chiffrée comme un taux de remplissage de la cavité palléale de 60% après ouverture et 10 minutes d'égouttage. Cette association qualité de forme et taux de chair élevé constitue le très haut-de-gamme qui, consommé cru, est très apprécié par les consommateurs dans tous les pays du monde.

Malheureusement, les sites dans lesquels ce travail de roulage des coquilles est assuré naturellement dans des enceintes classiques type poches ostréicoles sont rares. Ces sites doivent en effet présenter une richesse alimentaire suffisante et une agitation forte et constante, mais jamais excessive afin d'éviter une destruction totale du site d'élevage en cas de tempête.

Depuis quelques années, un certain nombre d'ostréiculteurs ont eu l'idée de créer des enceintes d'élevage dites suspendues, du type balancelle, dans lesquelles les huîtres seraient plus facilement mises en mouvement que dans des poches ostréicoles traditionnellement fixées sur les tables.

Les enceintes sont suspendues à des câbles tendus horizontalement, ou sous des barres en acier portées des tables ostréicoles. Elles sont très mobiles, et sont donc susceptibles de transférer aux huîtres qu'elles contiennent le mouvement imprimé par les courants marins et par des vagues de moindre amplitude que celles nécessaires au brassage des huîtres dans les enceintes fixes.

Il existe plusieurs modèles d'enceintes suspendues : la plupart sont des enceintes tubulaires, pourvues ou non d'une porte à une des extrémités, et suspendues à des câbles fixés à leur sommet.

Ces modèles présentent un certain nombre de handicaps sérieux, qui limitent énormément leur usage.

Ces enceintes sont très fragiles. Elles sont efficaces pour brasser des huîtres dans des conditions moyennement sévères (courant marin, houle ...) mais ne supportent pas les conditions sévères acceptées par les enceintes fixes. Elles ne sont donc utilisables qu'en milieu semi-lagunaire, protégé, et ne peuvent donc être employées que dans une très faible proportion des sites d'élevages ostréicoles pour la production d'huître à la française.

Deuxièmement, compte-tenu du mouvement oscillant, l'ensemble de ces enceintes a spontanément été conçu selon une forme cylindrique qui laisse peu de surface disponible pour une masse conséquente d'huîtres. En effet, les huîtres s'accumulant au point bas de l'enceinte, elles disposent d'une faible surface pour s'étaler. Dès que la croissance est suffisante pour remplir la moitié de l'enceinte, les huîtres s'empilent et les mouvements ne sont plus suffisants pour rouler les huîtres. L'élevage se réoriente naturellement vers une dégradation de la qualité de la coquille et de la chair.

Troisièmement, une conséquence accessoire de la forme cylindrique est l'empilement des huîtres, celle-ci ne pouvant rouler dans l'enceinte que si les conditions d'agitation sont très fortes. Ceci est assez incompatible avec la fragilité du matériel.

Quatrièmement, ces enceintes cylindriques présentent un encombrement important, et occupent donc un énorme volume de stockage. Ceci limite la capacité de transport des huîtres, et complique la possibilité d'empiler les enceintes de manière stable sur les navires ou les remorques de manutention par comparaison avec les poches ostréicoles plates qui s'empilent aisément et ne présentent qu'un volume légèrement supérieur à celui des huîtres transportées.

Cinquièmement, ces enceintes sont très difficiles à nettoyer, car elles présentent une multitude de faces et un volume intérieur inaccessible au jet de lavage.

Sixièmement, elles ne peuvent être retournées, et subissent donc un encrassement par les algues sur la face éclairée et par les ascidies sur la face inférieure, à l'abri du soleil. Ceci occasionne rapidement une occultation du maillage privant ainsi les huîtres à l'intérieur du flux d'eau nécessaire à leur bonne alimentation.

Pour palier une partie des difficultés ci-dessus, FR 2 576 484 A1 propose d'ajouter un flotteur à l'extérieur de l'enceinte. Ainsi, l'enceinte se retourne entre la marée haute, pendant laquelle elle flotte, et la marée basse, pendant laquelle elle pend. Il est clair que ce retournement permet un meilleur brassage des huîtres, notamment au moment de l'émergence à marée descendante. Néanmoins, cet effet reste limité, à cause de la forme cylindrique favorisant l'accumulation en point bas plutôt que la circulation des huîtres dans l'enceinte. Par ailleurs, les problèmes de fragilité, d'encombrement et de difficultés de nettoyage sont fortement aggravés par la présence des flotteurs externes.

Le document FR 2 908 013 décrit un dispositif d'élevage en mer de coquillages comportant un casier se présentant sous la forme d'une structure oscillant autour d'un axe et comportant au moins un organe automatique de commande de l'oscillation réalisé sous forme d'un flotteur suivant les variations de niveau de l'eau d'immersion du casier et modifiant, en fonction du niveau de l'eau, la position angulaire du casier.

Dans ce contexte, l'invention vise à proposer un dispositif d'élevage en mer qui ne présente pas les inconvénients ci-dessus et qui permette d'améliorer les résultats en termes de forme de coquille, de taux de chair et d'économie de main d'oeuvre.

A cette fin, l'invention porte sur un dispositif d'élevage en mer selon la revendication 1.

Le dispositif flotteur permet à l'enceinte de suivre le niveau de la marée quand la mer se trouve au niveau de l'enceinte. Il fait varier l'inclinaison de l'enceinte du haut vers le bas et du bas vers le haut quand la mer monte et descend, ce qui oblige les coquillages à rouler. L'enceinte suit aussi le mouvement ondulatoire des vagues, ce qui démultiplie le mouvement précédent et crée, grâce à la surface inférieure de l'enceinte ainsi disposée à l'interface air/eau subissant l'effet de la vague venant frapper le dessous de l'enceinte, un effet de lavage par l'eau giclant en surpression à travers les mailles de l'enceinte (effet de soufflage des vagues bien connu dans les cavités rocheuses en bord de mer). Cet effet est particulièrement fort quand l'enceinte présente une surface inférieure large et plate, selon un mode de réalisation privilégié de l'invention.

L'existence de deux degrés de liberté en rotation permet d'ajouter au mouvement de l'enceinte suivant une direction verticale une composante suivant une direction sensiblement horizontale par rapport au châssis. Ceci permet d'appliquer un effort de cisaillement aux coquillages dans un plan sensiblement horizontal, du fait de l'inertie de ces animaux, qui favorise la circulation des animaux d'aquaculture et leur permet de rouler même avec une inclinaison faible. Dans le cas des huitres, ceci favorise le décollement des huitres qui se seraient collées par nacration à l'enceinte pendant les périodes sans agitation. Le mouvement appliqué aux coquillages est similaire à celui qu'un cuisinier applique à une poêle pour éviter que le contenu de la poêle n'attache à celle-ci : il incline la poêle dans différentes directions tout en déplaçant la poêle dans un temps sensiblement horizontal, de manière à appliquer un effort de cisaillement aux aliments se trouvant dans la poêle.

Le dispositif peut en outre présenter une ou plusieurs des caractéristiques des revendications 2 à 15, considérées individuellement ou selon toutes les combinaisons techniquement possibles.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un dispositif d'élevage selon un premier mode de réalisation, selon l'invention ;
- la figure 2 illustre de manière schématique le mouvement ascendant de l'une des enceintes d'élevage du dispositif de la figure 1,
- la figure 3 illustre le mouvement descendant de la même enceinte d'élevage ;
- la figure 4 est une illustration plus précise de plusieurs enceintes du dispositif d'élevage de la figure 1, en vue de dessus ;
- les figures 5 et 6 sont des vues respectivement de face et de côté d'une demi-enceinte utilisée pour constituer les enceintes de la figure 4 ;
- les figures 7 et 8 sont des vues agrandies de détails de la demi-enceinte des figures 5 et 6 ;
- la figure 9 est une vue de côté d'un organe de liaison du dispositif de la figure 4, avant fixation à l'enceinte d'élevage ;
- les figures 10 à 12 sont des vues en perspectives de l'organe de liaison de la figure 9, respectivement, monté sur l'enceinte d'élevage, en position ouverte stable, et refermé autour du châssis ;
- la figure 13 est une vue de dessus de organe de liaison de la figure 12, après fixation à l'enceinte d'élevage et au châssis;
- la figure 14 est une vue en perspective d'une des enceintes d'élevage de la figure 4, montrant les zones de butée renforcées et les organes de blocage ;
- la figure 15 est une représentation schématique simplifiée en perspective du dispositif d'élevage de la figure 1, illustrant la façon dont il est possible de retourner les enceintes d'élevage ;
- la figure 16 illustre un second mode de réalisation qui ne fait pas partie de l'invention, dans une situation où le flotteur se trouve à mi-marée au niveau de la surface de la mer ;
- les figures 17 et 18 sont des représentations schématiques de côté du dispositif d'élevage de la figure 16, à marée haute et à marée basse ;
- la figure 19 illustre la façon dont différents dispositifs d'élevage selon la figure 16 peuvent être disposés le long de l'estran ;
- la figure 20 illustre une variante de réalisation du second mode de réalisation, dans laquelle le système assurant la suspension des enceintes comprend une guirlande de flotteurs disposée dans la zone de marnage et un flotteur interne logé dans chaque enceinte ;
- la figure 21 illustre un autre mode d'agencement des châssis sur lesquels sont montées les enceintes.

L'invention porte sur un dispositif d'élevage en mer de coquillages, et plus particulièrement d'huîtres. En variante, les coquillages sont toute sorte de bivalves comme des palourdes, des moules ou tout autre type de coquillage.

Ce dispositif est prévu pour l'élevage en mer. Cet élevage peut être effectué au large des côtes ou dans des pertuis, des estuaires ou des rias, ou encore dans des étangs communiquant avec la mer ou dans tout autre endroit adapté.

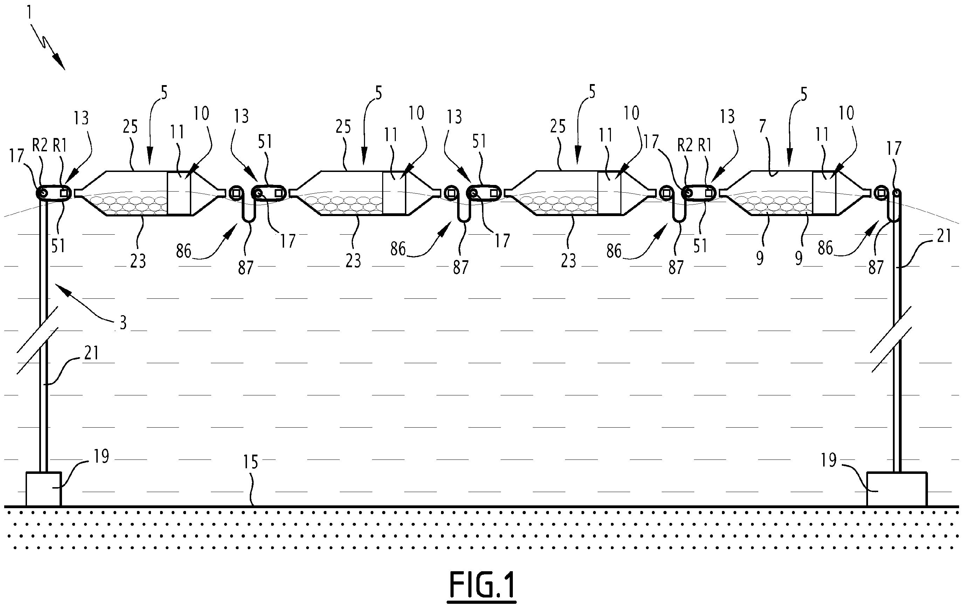

Comme illustré sur les figures 1 à 3, le dispositif d'élevage 1 comprend :
- un châssis 3 ;
- au moins une enceinte d'élevage 5 délimitant intérieurement un volume de réception 7 pour les animaux d'aquaculture 9 ;
- un dispositif flotteur 10 lié à ladite au moins une enceinte d'élevage 5 ;
- une liaison 13 de ladite au moins une enceinte d'élevage 5 au châssis 3.

Le châssis 3 est prévu pour être placé en fond de mer. Typiquement, il repose sur le fond 15 de la mer. Il est fixe par rapport au fond marin 15.

Dans le premier mode de réalisation, le châssis 3 comporte une pluralité de barres métalliques 17 parallèles les unes aux autres et espacées les unes aux autres au moins horizontalement.

Par exemple, les barres métalliques 17 sont placées à la même distance du fond 15.

Le châssis 3 comporte par exemple des gueuses 19 reposant sur le fond marin 15, supportant des poteaux rigides 21 auxquels sont rigidement fixées les barres métalliques 17. Les barres métalliques 17 sont régulièrement écartées les unes des autres suivant une direction qui est horizontale sur la figure 1.

Dans le premier mode de réalisation, le dispositif d'élevage comporte une pluralité d'enceintes d'élevage 5, chacune disposée entre deux barres métalliques 17.

Chaque enceinte d'élevage 5 présente un fond inférieur 23, sensiblement plat.

Elle présente de préférence un fond supérieur sensiblement plat 25, parallèle et opposé au fond inférieur 23.

Les fonds inférieur et supérieur 23, 25 présentent entre eux un écartement déterminé. Cet écartement est pris suivant une direction sensiblement perpendiculaire aux deux fonds.

Les fonds inférieur et supérieur 23, 25 présentent également chacun une longueur et une largeur supérieures à trois fois ledit écartement. La longueur est prise suivant une direction contenue dans le plan dans lequel s'inscrit le fond supérieur ou inférieur. La largeur est prise suivant une direction contenue dans ledit plan et perpendiculaire à la longueur.

De préférence, la longueur et la largeur sont supérieures à cinq fois l'écartement, encore de préférence supérieure à dix fois l'écartement.

Ainsi, l'enceinte d'élevage a une forme générale plate, et a une grande surface au regard de son épaisseur. Elle a ainsi la forme générale d'une poche utilisée typiquement pour l'élevage des huîtres.

Par exemple, l'enceinte d'élevage présente une longueur de l'ordre de 1 mètre, une largeur de l'ordre de 500 mm, ainsi qu'une hauteur de l'ordre 50 mm.

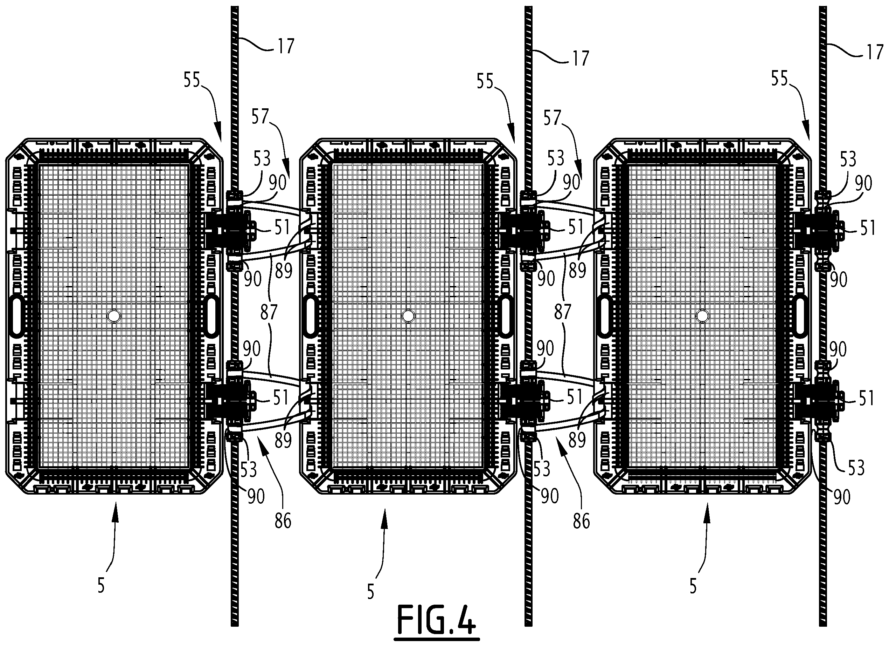

Comme visible sur les figures 4 à 6, l'enceinte d'élevage comprend de préférence deux demi-enceintes 27, l'une définissant le fond inférieur 23 et l'autre le fond supérieur 25.

Les deux demi-enceintes délimitent ensemble le volume 7 de réception des animaux d'aquaculture.

Elles sont fixées de manière amovible l'une à l'autre, par des moyens qui seront décrits plus loin.

Avantageusement, les deux demi-enceintes 27 sont identiques l'une à l'autre.

Elles sont de préférence réalisées en une matière plastique, par exemple en polypropylène.

Elles sont typiquement obtenues par injection de la matière plastique. Le fait que les deux demi-enceintes soient identiques l'une à l'autre permet donc de fabriquer les deux demi-enceintes avec le même moule, et permet donc une fabrication particulièrement économique.

Les demi-enceintes 27 ont une forme générale concave. Les concavités des deux demi-enceintes sont tournées l'une vers l'autre quand elles sont fixées l'une à l'autre pour constituer l'enceinte d'élevage.

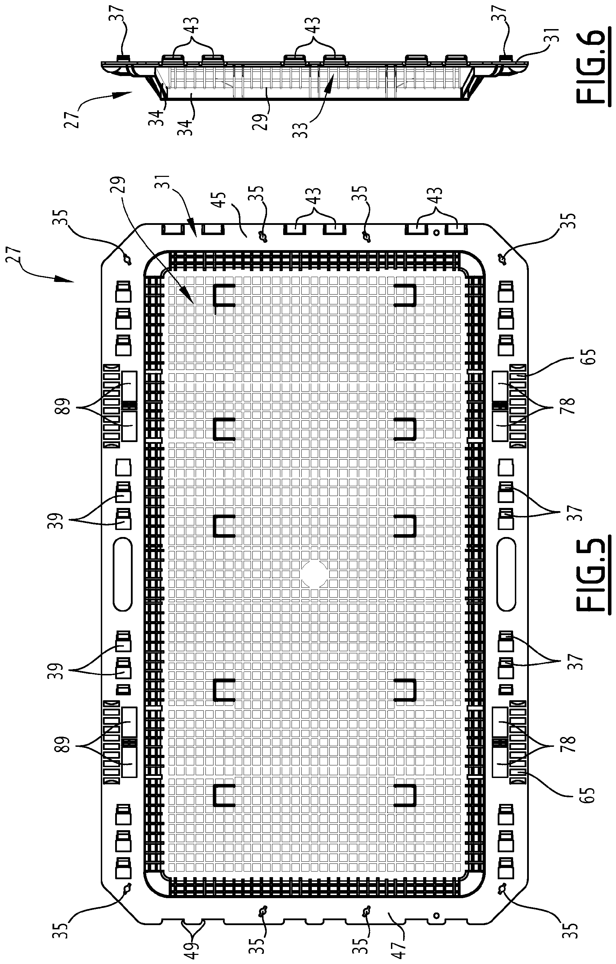

Chaque demi-enceinte 27 comprend une partie sensiblement plane 29 définissant le fond supérieur ou le fond inférieur suivant le cas, un bord plat 31 annulaire entourant la partie plane 29, et une paroi à contour fermé 33 raccordant la partie plane 29 au bord plat 31 (figures 5 et 6). La paroi à contour fermé 33 raccorde un bord extérieur de la partie plane 29 à un bord intérieur du bord plat 31. En d'autres termes, le bord plat 31 forme une collerette, s'étendant vers l'extérieur à partir de la paroi 33.

Le bord plat 31 s'inscrit dans un plan parallèle à la partie plane 29, définissant le plan de contact entre les deux demi-enceintes quand celles-ci sont assemblées pour constituer l'enceinte d'élevage.

La partie plane 29 et la paroi latérale 33 sont percées par de multiples ouvertures non référencées, suffisamment petites pour que les animaux d'aquaculture ne puissent pas s'échapper hors de l'enceinte d'élevage, mais suffisamment grandes pour permettre une circulation de l'eau entre l'intérieur et l'extérieur de l'enceinte d'élevage.

La partie plane 31 et la paroi latérale 33 sont renforcées par des nervures 34.

Avantageusement, les deux demi-enceintes 27 sont emboîtables l'une dans l'autre. Ceci permet d'empiler un grand nombre de demi-enceintes et de les stocker dans un volume réduit.

Pour ce faire, la paroi latérale 33 est évasée, et diverge à partir la partie plane 29 vers le bord plat 31.

Dans l'exemple représenté, la partie plane 29 est rectangulaire, et le bord plat 31 est délimité par un bord externe rectangulaire et par un bord interne également rectangulaire.

En variante, la partie plane 29 et le bord plat 31 ont toute forme adaptée : carrée, circulaire, ovale etc.

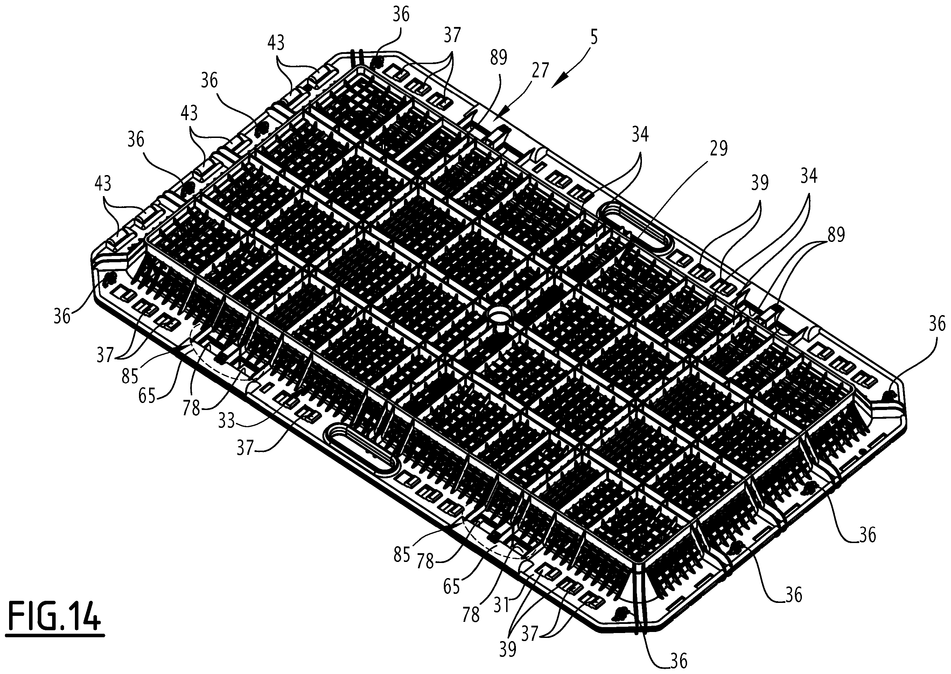

De préférence, les deux demi-enceintes 27 sont fixées l'une à l'autre par des organes de blocage, typiquement des goupilles 36 représentées sur la figure 14. Pour ce faire, le bord plat 31 présente des fentes 35 réparties au moins de deux côtés opposés de la partie plane 29. Les fentes 35 sont prévues pour recevoir les orages de blocage. Pour constituer l'enceinte d'élevage 5, les deux demi-enceintes 27 sont placées avec leur bord respectif 31 l'un contre l'autre. Les fentes 35 des deux demi-enceintes sont alors en coïncidence et il est possible d'y engager les organes de blocage.

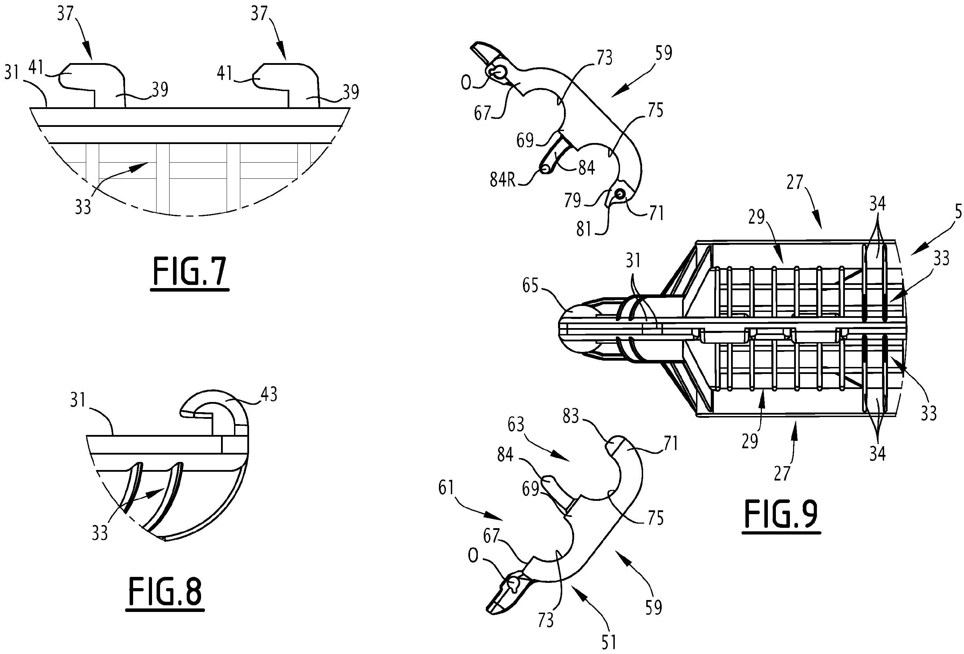

De manière à renforcer la fixation des deux demi-enceintes 27 l'une à l'autre, chaque demi-enceinte comporte des crochets 37 (figure 7) et des orifices 39 de réception des crochets de l'autre demi-enceinte (figure 5).

Les orifices 39 sont découpés dans le bord plat 31. Ils sont répartis le long d'au moins deux côtés opposés de la partie plane 29, par exemple les côtés qui ne portent par les fentes 35. Les crochets 37 sont portés par le bord plat 31 et font saillie à l'opposé de la partie plane 29 par rapport au bord plat 31.

Comme visible sur la figure 7, ils ont une forme générale en L, avec un tronçon 39 d'orientation sensiblement perpendiculaire au bord plat 31, prolongé par un tronçon terminal 41 s'étendant suivant une direction sensiblement parallèlement au bord plat 31.

Les tronçons terminaux 41 de toutes les pattes 37 pointent dans la même direction.

Les crochets 37 de chaque demi-enceinte sont prévus pour être engagés dans les orifices 39 de l'autre demi-enceinte selon un mouvement sensiblement perpendiculaire aux parties planes 29 des deux demi-enceintes. Ils sont ensuite mis en prise autour des bords desdits orifices 39 par un mouvement de translation de l'une des demi-enceintes par rapport à l'autre demi-enceinte suivant une direction longitudinale.

A l'issue de ce mouvement, le bord plat 31 de chaque demi-enceinte 27 est pincé entre les tronçons terminaux 41 et le bord plat 31 de l'autre demi-enceinte 27. Les crochets 37 ne peuvent plus être dégagés des orifices 39 par un mouvement perpendiculaire aux parties planes 29 des demi-enceintes.

A l'issue de ce mouvement de translation, les fentes 35 des deux demi-enceintes sont en coïncidence les unes avec les autres. Les organes de blocage peuvent alors être insérés dans ces fentes et bloquer ainsi toute possibilité de translation des deux demi-enceintes, au moins selon la direction longitudinale, et typiquement selon toutes les directions, celles-ci étant alors solidement solidarisées par les crochets.

De manière à renforcer encore la liaison entre les deux demi-enceintes, des crochets supplémentaires 43 sont prévus sur un segment 45 du bord plat s'étendant transversalement (figures 5 et 8). Ces crochets supplémentaires 43 ont une forme générale sensiblement identique à celle des crochets 37. Les crochets supplémentaires 43 sont portés par le bord externe de la collerette plate 31. Leurs tronçons terminaux pointent longitudinalement, suivant la même direction que les tronçons terminaux 41 des crochets 37. Le segment transversal 47 du bord plat 31, situé à l'opposé du segment transversal 45, présente sur son bord externe des encoches 49. Quand les deux demi-enceintes 27 sont assemblées l'une à l'autre comme décrit plus haut, à savoir un premier mouvement perpendiculaire aux parties planes 29 et un second mouvement longitudinal, les pattes supplémentaires 43 de chaque demi-enceinte viennent s'engager dans les encoches 49 de l'autre demi-enceinte et s'adapter autour du segment transversal 47 de l'autre demi-enceinte. Le bord plat 31 de chaque demi-enceinte 27 est ainsi pincé entre les pattes supplémentaires 43 et le bord plat 31 de l'autre demi-enceinte 27.

Ainsi, les deux demi-enceintes 27 sont liées l'une à l'autre par une liaison particulièrement résistante. La rigidité de l'enceinte d'élevage est augmentée. Ceci est dû notamment à l'existence d'un grand nombre de points de fixation des deux demi-enceintes 27 l'une à l'autre, répartis autour des fonds supérieur et inférieur.

La liaison 13 autorise une rotation de chaque enceinte d'élevage 5 autour d'un premier axe de rotation R1 sensiblement horizontal, et une rotation du premier axe de rotation R1 par rapport au châssis 3 autour d'un second axe de rotation R2 sensiblement parallèle au premier axe de rotation R1 (figures 1 à 3).

Plus précisément, la liaison 13 comporte au moins un organe de liaison 51 de type bielle, monté pivotant sur l'enceinte d'élevage 5 autour du premier axe de rotation R1 et monté pivotant sur le châssis 3 autour du second axe de rotation R2.

Comme visible sur la figure 4, la liaison 13 comporte typiquement deux organes de liaison de type bielle 51 pour chaque enceinte d'élevage, chaque organe de liaison 51 liant l'enceinte d'élevage 5 au châssis. Les premiers axes de rotation R1 des deux organes de liaison d'une même enceinte d'élevage sont alignés l'un avec l'autre. De même, les seconds axes de rotation R2 des deux organes de liaison 51 de la même enceinte 5 sont alignés l'un avec l'autre.

L'enceinte d'élevage 5 présente un bord proximal 55 et un bord distal 57 opposés l'un à l'autre, tournés vers les deux barres métalliques encadrant l'enceinte d'élevage 5.

Dans l'exemple représenté, le bord proximal et le bord distal sont longitudinaux.

Ces bords 55, 57 sont constitués par des segments des collerettes plates 31 des deux demi-enceintes plaqués l'un contre l'autre.

La liaison 13 lie le bord proximal 55 au châssis 3.

Plus précisément, chaque organe de liaison 51 lie le bord proximal 55 à la barre métallique 17 jouxtant ledit bord proximal.

Comme visible sur les figures 4, 12 et 13, la liaison 13 comporte, pour chaque organe de liaison 51, un manchon 53 fixé à la barre métallique 17 jouxtant le bord proximal 55 de l'enceinte d'élevage 5. L'organe de liaison 51 est monté pivotant autour du manchon 53. La barre métallique 17 constitue ainsi le second axe de rotation R2.

Ce manchon 53 entoure complètement la barre métallique 17. Par exemple, il est constitué de deux demi-coques de forme générale semi-cylindrique, placées de part et d'autre de la barre métallique 17. Les deux demi-coques sont rigidement fixées l'une à l'autre par tout moyen adapté, par exemple par des goupilles. Le manchon 53 est typiquement en polyoléfine. On réduit ainsi l'usure de l'organe de liaison 51, qui n'est pas en contact direct avec la barre métallique.

Comme visible sur les figures 9 à 13, chaque organe de liaison 51 comporte avantageusement deux demi-pinces 59 indépendantes l'une de l'autre. Les deux demi-pinces 59 définissent ensemble deux paliers 61, 63, sensiblement parallèles l'un à l'autre. Le palier 61 est destiné à recevoir intérieurement le manchon 53. Le palier 63 est destiné à recevoir intérieurement un cylindre 65 formé sur le bord proximal 55 de l'enceinte d'élevage.

Chaque demi-pince 59 présente donc la forme générale d'un W, avec trois massifs 67, 69 et 71 délimitant entre eux deux creux 73 et 75. Les creux 73 et 75 ont des formes semi-cylindriques. Quand les deux demi-pinces sont assemblées l'une à l'autre, les creux 73 des deux demi-pinces constituent le palier 61, et les creux 75 des demi-pinces constituent le palier 63.

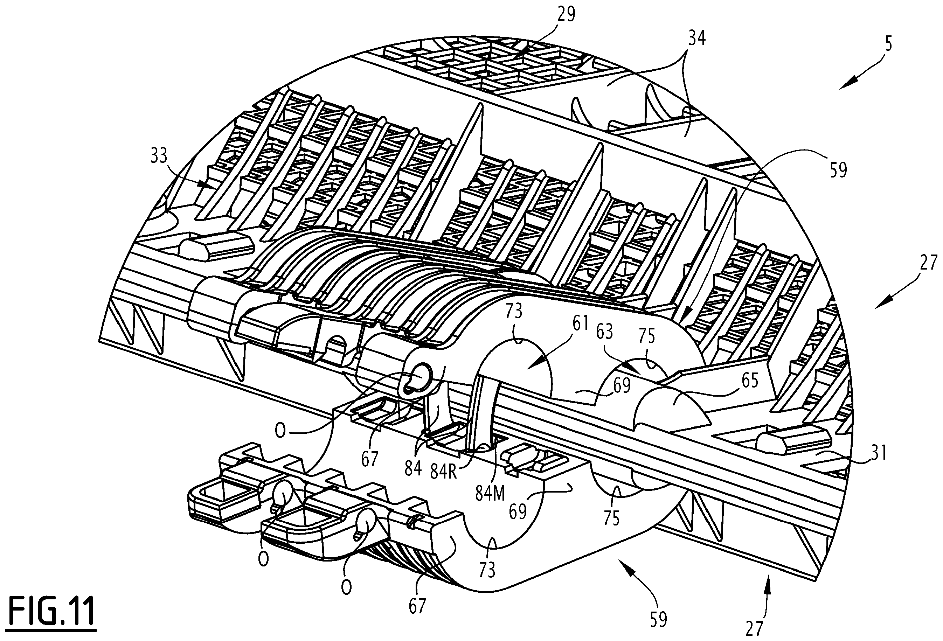

Les deux demi-pinces 59 sont susceptibles d'être montées sur l'enceinte d'élevage 5 dans une position ouverte stable, représentée sur la figure 11, dans laquelle les demi-pinces 59 sont liées l'une à l'autre par une liaison pivot 77.

L'axe de rotation du pivot est sensiblement parallèle au premier axe de rotation.

Pour permettre la mise en place des deux demi-pinces, le bord proximal 55 du casier présente, le long du cylindre 65 deux orifices 78. Ces orifices sont décalés vers l'intérieur de l'enceinte par rapport au cylindre 65.

La liaison pivot 77 comporte deux plaques 79, parallèles l'une à l'autre, formées sur le massif 71 de l'une des demi-pinces (figures 5 et 9). Chaque plaque 79 porte des tourillons 81 sur ses deux faces opposées. Les quatre tourillons 81 sont alignés.

Le massif 71 de l'autre demi-pince forme deux paires de flasques 83, chaque paire de flasques étant prévue pour recevoir entre ses deux flasques l'une des plaques 79. Des berceaux de réception des tourillons 81 (non représentés) sont creusés dans les faces en vis-à-vis des deux flasques d'une même paire.

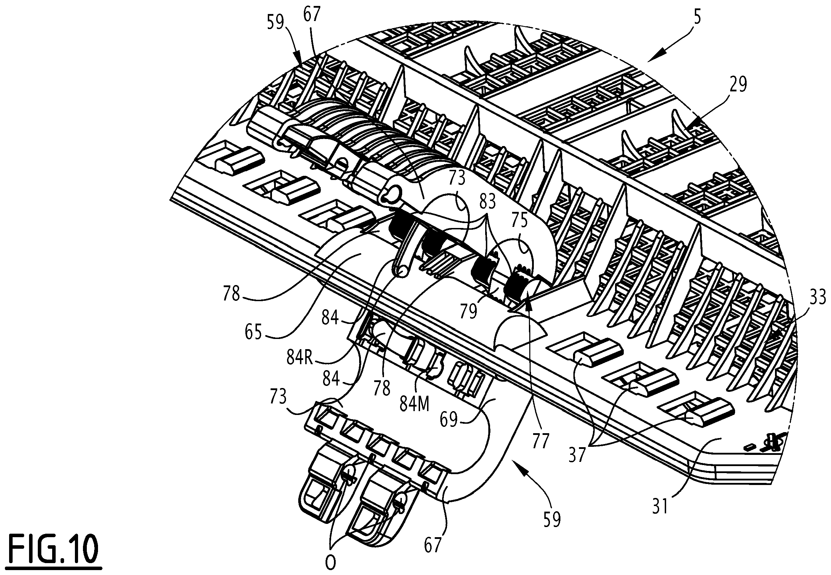

Les demi-pinces 59 sont d'abord montées sur l'enceinte 5 comme illustré sur la figure 10.

On voit que les plaques 79 sont chacune engagée dans l'un des orifices 78. Elles sont engagées entre les flasques 83 de l'autre demi-pince 59. Les demi-pinces forment un angle d'environ 90° l'une avec l'autre. La rotation des deux demi-pinces l'une par rapport à l'autre dans le sens d'une ouverture de la pince est bloquée par des reliefs formés sur les demi-pinces 59. En revanche, les deux demi-pinces 59 sont libres de pivoter l'une par rapport à l'autre autour de la liaison pivot 77 dans le sens d'une fermeture. Il est à noter que les berceaux formés dans les flasques 83 sont prévus pour que l'engagement des tourillons 81 soit facile, mais que l'extraction des tourillons 81 en dehors des berceaux nécessite un effort significatif, de manière à éviter que les deux demi-pinces se séparent l'une de l'autre de manière involontaire.

A partir de la position de la figure 10, les demi-pinces 59 peuvent pivoter autour de la liaison pivot 77 jusqu'à la position ouverte stable, représentée sur la figure 11. Chaque demi-pince 59 comporte un bras 84, portant à son extrémité un relief 84R. En position ouverte, le relief 84R de chaque demi-pince est calé de manière réversible dans un logement 84M de l'autre demi-pince. Ceci permet de maintenir les demi-pinces 59 dans la position ouverte, sans empêcher que le mouvement de rotation des demi-pinces l'une vers l'autre soit prolongé.

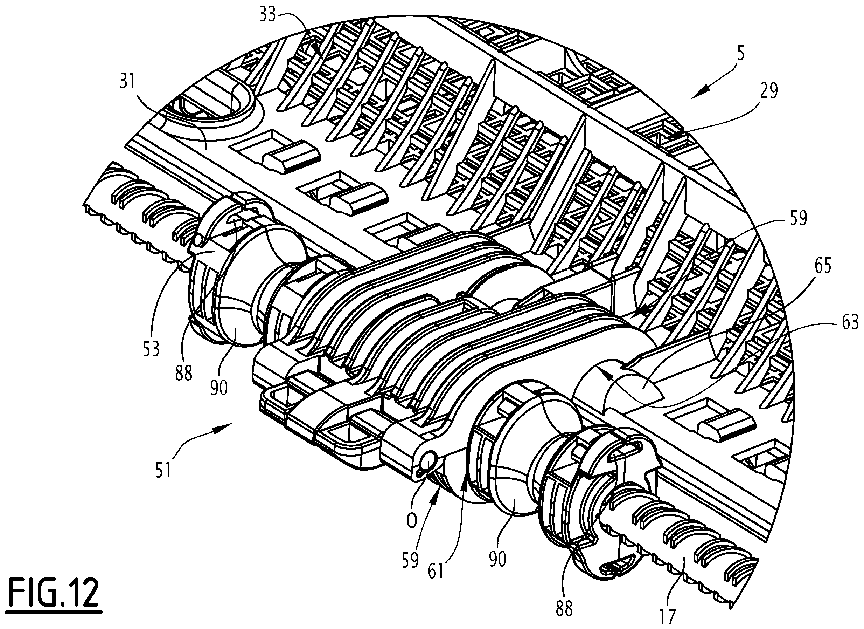

Ainsi, à partir de la position ouverte stable (figure 11), les deux demi-pinces peuvent être refermées autour du châssis 3 par pivotement autour de la liaison pivot 77 (figure 12). Les bras 84 coulissent à travers les logements 84M.

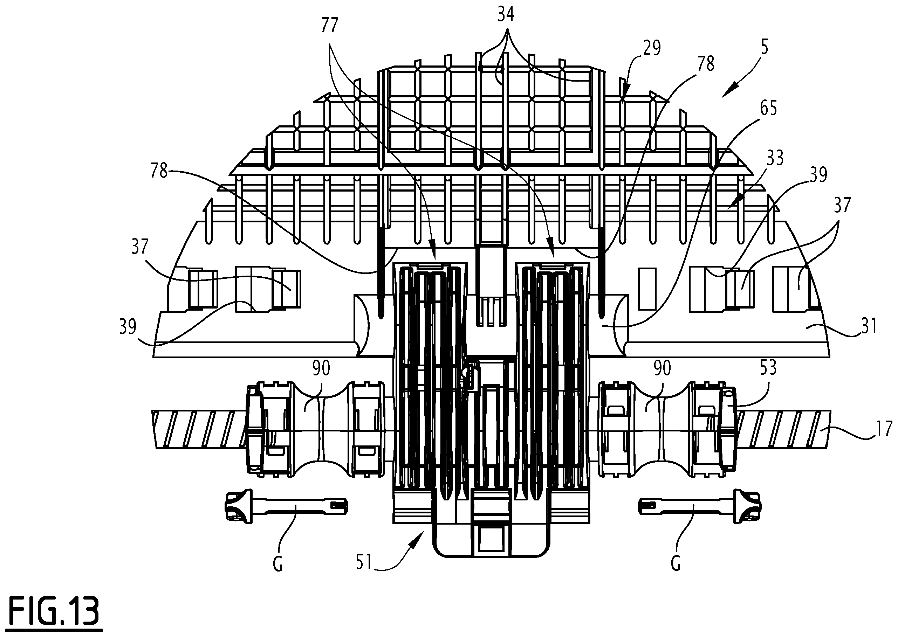

Les creux 75 se mettent alors en place autour du cylindre 65, et les creux 73 autour du manchon 53. Dans cette position, les massifs intermédiaires 69 des deux demi-pinces 59 sont en appui l'un contre l'autre, et les massifs 67 des deux demi-pinces 59 sont également en appui l'un contre l'autre. Les deux demi-pinces 59 sont verrouillées dans cette position par des goupilles G représentées sur la figure 13, engagées dans des orifices O alignés des deux demi-pinces 59. On comprend donc que le montage de l'organe de liaison 51 est particulièrement simple. Il permet une mise en place aisée des enceintes d'élevage 5 sur le châssis 3.

L'enceinte d'élevage 5 comprend au moins une zone de butée 85 (figure 14), coopérant avec l'organe de liaison 51 de manière à limiter le débattement en rotation de l'enceinte d'élevage 5 par rapport à l'organe de liaison 51 autour du premier axe de rotation R1.

Typiquement, l'enceinte d'élevage 5 comporte deux zones de butée 85, limitant le débattement en rotation de l'enceinte d'élevage 5 par rapport à l'organe de liaison 51 dans les deux sens de rotation opposés.

Ces zones 85 sont renforcées du fait qu'elles comportent un plus grand nombre de nervures 34 que les autres zones de l'enceinte 5, de manière à rigidifier la structure de l'enceinte d'élevage 5 au niveau desdites zones 85.

Par exemple, ces zones 85 sont les zones de la paroi périphérique 33 situées en regard de chaque organe de liaison. La zone 85 ménagée sur la paroi périphérique 33 d'un des demi-casiers limite la rotation dans un sens, et celle formée sur la paroi 33 de l'autre demi-casier limite la rotation dans l'autre sens. Ces butées assurent ainsi un effet de choc en fin de course favorisant le décollement et le déplacement des animaux d'aquaculture sur le plateau.

Par ailleurs, le dispositif d'élevage 1 comporte avantageusement un dispositif limiteur 86, limitant le débattement de l'enceinte d'élevage 5 par rapport au châssis 3 suivant la direction verticale (figure 4).

Le dispositif limiteur comprend de préférence au moins un lien souple 87 qui lie le châssis 3 à l'enceinte d'élevage 5.

De préférence, le ou chaque lien souple 87 est élastique. Ceci permet d'amortir le mouvement de l'enceinte d'élevage dans le sens vertical.

Typiquement, chaque enceinte d'élevage 5 est liée par deux liens souples 87 au châssis 3.

De préférence, chaque lien souple 87 lie le bord distal 57 de l'enceinte d'élevage 5 au châssis 3. Plus précisément, le lien 87 lie le bord distal 57 à la barre métallique 17 située à l'opposé des organes de liaison 51. Ainsi, l'enceinte d'élevage est liée d'un côté par les organes de liaison 51 à l'une des barres métalliques 17, et de l'autre côté par les liens souples 87 à l'autre barre métallique 17.

Comme visible notamment sur les figures 4 et 5, le bord distal 57 présente des orifices 89 permettant le passage du lien souple 87.

Typiquement, les extrémités du lien souple 87 sont fixées au manchon 53 sur lequel est articulée l'enceinte d'élevage 5 voisine. Comme illustré sur la figure 4, les extrémités du lien souple 87 sont enroulées autour du manchon, dans des gorges 90 formées par le manchon 53.

Les manchons 53 peuvent comporter en outre des encoches 88, visibles sur la figure 12, permettant d'accrocher le lien souple au manchon.

Il est à noter que les orifices 89 sont identiques et positionnés de la même façon que les orifices 78.

Plus généralement, on notera que chaque demi-casier est symétrique par rapport à un plan médian longitudinal, perpendiculaire à la partie plane 29.

Il est ainsi possible de monter les enceintes d'élevage dans n'importe quel sens.

Dans le premier mode de réalisation, chaque enceinte d'élevage 5 est équipée de son propre flotteur 11, qui constitue ainsi le dispositif flotteur 10. Le flotteur 11 est lié à une zone de l'enceinte d'élevage 5 située à proximité du bord distal 57.

Avantageusement, comme illustré sur la figure 1, le flotteur 11 est logé à l'intérieur de l'enceinte d'élevage 5. Il est fixé à l'enceinte d'élevage 5 par tout moyen adapté, par exemple en formant des reliefs sur la surface interne de l'enceinte d'élevage, qui maintiennent le flotteur 11 en place une fois les deux demi-enceintes 27 en prise l'une avec l'autre.

Le flotteur 11 est dimensionné pour faire flotter l'enceinte contenant les animaux d'aquaculture jusqu'à la fin de l'élevage, c'est-à-dire quand ces animaux ont leur poids maximum.

Le dispositif flotteur 10 peut aussi être adapté au fur et à mesure de l'élevage, par exemple en ajoutant de la flottabilité à mesure que la masse des animaux d'aquaculture dans les enceintes augmente.

Le fonctionnement du dispositif d'élevage va maintenant être détaillé, plus particulièrement en référence aux figures 1 à 3.

Le dispositif est conçu pour transmettre les mouvements des vagues aux enceintes d'élevage, et faire dévaler les animaux d'aquaculture sur une distance importante en les faisant rouler sur la surface intérieure de l'enceinte et les uns contre les autres, notamment au moment des marées descendante et montante.

Sur la figure 1, le dispositif est représenté quand le niveau de l'eau est sensiblement au niveau des barres métalliques 17.

Le fond intérieur 23 est sensiblement horizontal.

Le dispositif flotteur 10 se trouve au niveau de la surface de l'eau.

Les deux axes de rotation R1, R2 sont sensiblement dans un plan horizontal.

Les liens souples 87 ne sont pas tendus.

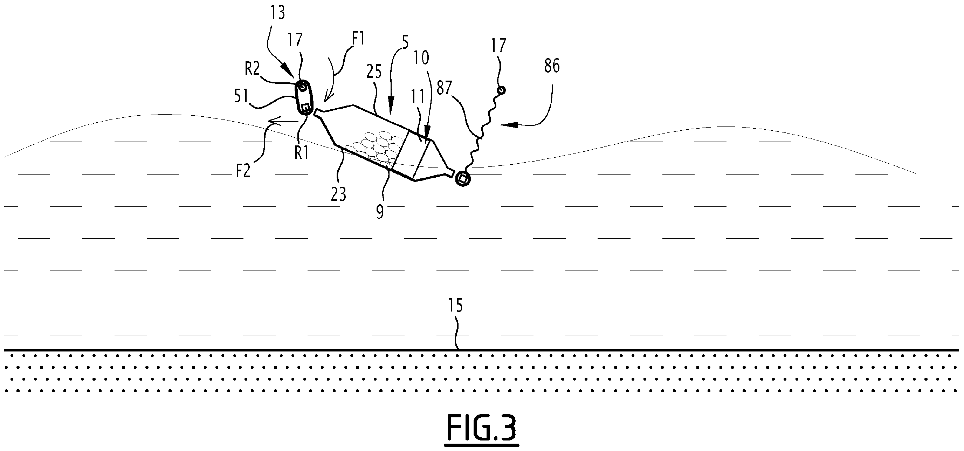

Quand l'enceinte d'élevage se trouve dans un creux entre deux vagues, comme illustré sur la figure 3, le niveau vertical du dispositif flotteur 10 s'abaisse.

L'enceinte d'élevage 5 adopte une position inclinée, le bord proximal 55 lié par la liaison 13 au châssis 3 restant plus haut et le bord distal 57 étant plus bas. La liaison 13 autorise le pivotement de l'enceinte d'élevage 5 autour des deux axes de rotation R1 et R2.

Du fait de l'inclinaison, notamment du fait que le fond inférieur 23 est incliné par rapport à l'horizontale, les animaux d'élevage 9 vont rouler sur le fond intérieur 23 et vont rouler les uns contre les autres en s'accumulant vers le bord distal 57 de l'enceinte d'élevage.

Du fait que la liaison 13 possède deux degrés de liberté en rotation, le mouvement de pivotement vers le bas de l'enceinte d'élevage 5 (flèche F1 de la figure 3) s'accompagne d'un mouvement d'orientation générale horizontale de l'enceinte 5, matérialisé par la flèche F2 de la figure 3. Ce mouvement général horizontal crée un effort de cisaillement au niveau du contact entre les animaux d'aquaculture et l'enceinte d'élevage, qui amplifie la circulation des animaux d'élevage et leur permet de dévaler et de rouler même avec des inclinaisons faibles. Cet effort de cisaillement, quand il est répété, permet éventuellement de décoller les animaux d'élevage qui seraient accrochés à l'enceinte d'élevage.

Ainsi, la liaison 13 permet de transformer le mouvement vertical de l'eau, dû aux vagues, en un mouvement d'agitation à la fois vertical et horizontal qui, associé à l'inclinaison de l'enceinte d'élevage 5, permet aux animaux d'aquaculture de dévaler sur le maillage plan de l'enceinte en roulant sur ce maillage les uns contre les autres.

Par ailleurs, les organes de liaison 51 en fin de course viennent buter contre les zones de butée 85 de l'enceinte d'élevage, ce qui renforce encore l'effet de cisaillement. Ceci favorise le décollement des animaux d'élevage, notamment des huîtres qui auraient pu se recoller par nacration entre deux périodes d'agitation.

Le dispositif limiteur 86 permet de limiter l'amplitude verticale du mouvement, ce qui permet à l'éleveur d'adapter le système aux conditions hydrauliques régnant dans la zone d'élevage et à la saisonnalité de son élevage.

Il est à noter que l'enceinte d'élevage 5 est animée de mouvements inverses à ceux matérialisés par les flèches F1 et F2 quand l'enceinte revient de sa position basse illustrée sur la figure 3 vers la position intermédiaire illustrée sur la figure 1.

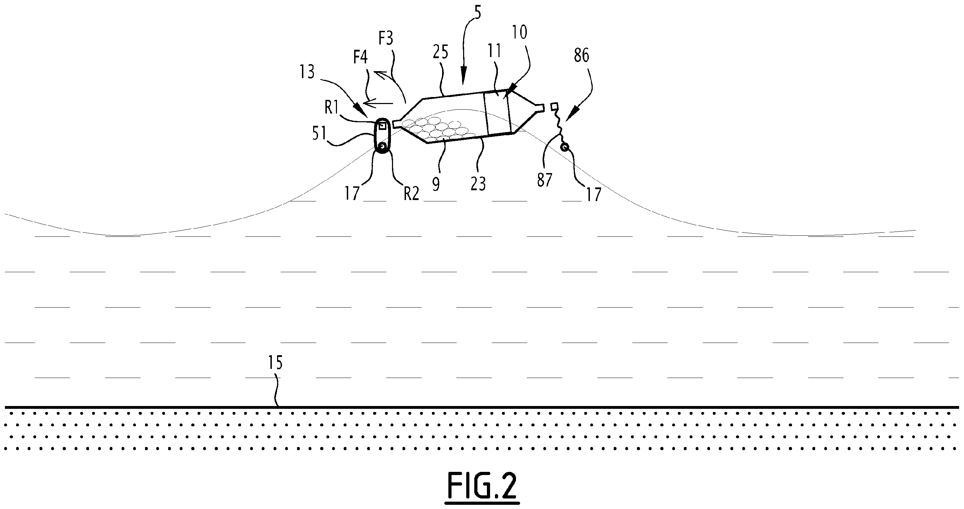

Comme visible sur la figure 2, quand l'enceinte d'élevage 5 se situe en haut d'une vague, l'enceinte d'élevage 5 adopte une inclinaison opposée à celle illustrée sur la figure 3. Le bord distal 57 se trouve plus haut que la barre métallique 17, de telle sorte que les animaux d'aquaculture 9 dévalent le fond inférieur 23 vers le bord proximal 55. L'enceinte d'élevage subit un mouvement de pivotement par rapport à la barre métallique 17, matérialisé par la flèche F3 de la figure 2. Ce pivotement est effectué vers le haut. Par rapport à la position de la figure 1, l'enceinte d'élevage 5 subit également un déplacement suivant une direction générale horizontale, matérialisé par la flèche F4 de la figure 2. De nouveau, il se crée un effort de cisaillement entre les animaux d'aquaculture et l'enceinte d'élevage, qui favorise le déplacement et le roulement des animaux d'élevage 9 au sein de l'enceinte d'élevage 5.

Les organes de liaison 51 en fin de course viennent buter contre les zones de butée 85 prévues à cet effet sur l'enceinte d'élevage 5. Le dispositif limiteur 86 limite la course verticale vers le haut de l'enceinte d'élevage 5 par rapport au châssis 3.

L'enceinte d'élevage 5 est animée de mouvements inverses de ceux représentés par les flèches F3 et F4 quand elle revient de sa position haute extrême matérialisée sur la figure 2 à la position intermédiaire représentée sur la figure 1.

Dans le premier mode de réalisation, le dispositif d'élevage 1 doit être disposé dans l'estran, de manière à ce que les enceintes d'élevage 5 se trouvent au niveau de la surface de l'eau à au moins un moment en cours de marée.

Ainsi le choix du niveau d'implantation du dispositif d'élevage sur l'estran permet d'adapter le dispositif aux conditions de marée. En effet, le marnage est caractérisé par deux paramètres : son amplitude, variable d'un jour à l'autre (par exemple en France les forts marnages alternent avec les faibles marnages sur une périodicité de 15 jours) et la vitesse de montée et de descente de l'eau qui par exemple suit la règle des douzièmes, ce qui signifie qu'au début ou à la fin de la marée descendante ou montante la vitesse de montée et de descente est trois fois plus lente qu'à mi-marée. En conséquence, selon l'implantation altimétrique du dispositif flotteur par rapport au marnage, on pourra soit obtenir dans la tranche supérieure des marnages de faible amplitude une agitation quotidienne sur une longue durée, soit obtenir dans la tranche inférieure des marnages de forte amplitude une agitation peu à très peu fréquente sur une longue durée, soit obtenir dans l'espace médiant du marnage une agitation plus ou moins fréquente et de plus courte durée.

Il est à noter que le dispositif limiteur 86 permet également de régler l'amplitude et la durée d'agitation des animaux d'aquaculture, afin d'en réguler l'effet recherché sur les animaux en élevage. En effet, les enceintes d'élevage 5 ne sont agitées que pendant une période limitée de la marée. Elles sont agitées entre le moment où la crête des vagues atteint la position basse de l'enceinte d'élevage (représentée sur la figure 3), et le moment où le creux des vagues dépasse la position haute des enceintes d'élevage (représentée sur la figure 2). Plus l'amplitude verticale du mouvement des enceintes d'élevage est grande, plus la durée d'agitation est grande et plus l'agitation est violente.

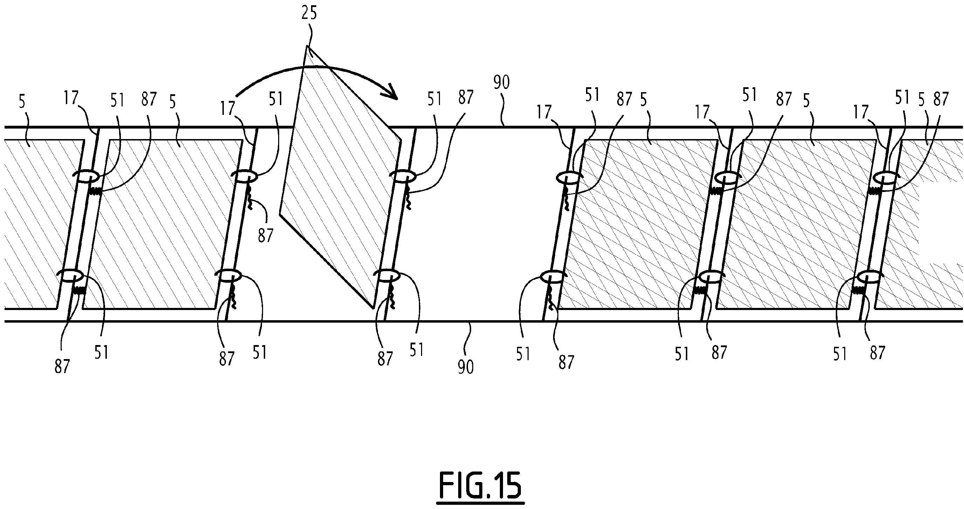

Un aspect avantageux du premier mode de réalisation de l'invention est représenté sur la figure 15. Comme décrit plus haut, le châssis 3 comporte une pluralité de barres métalliques 17, parallèles les unes aux autres et régulièrement écartées les unes des autres. Les barres métalliques 17 sont par exemple fixées à des traverses métalliques 90. Chaque enceinte d'élevage est disposée entre deux barres métalliques 17. Son bord proximal 55 est lié par la liaison 13 à l'une des barres métalliques 17, et son bord distal 57 est lié par un ou plusieurs liens souples 87 à l'autre barre métallique 17. L'enceinte d'élevage 5 voisine est montée de la même façon. Plus précisément, le bord distal 55 de l'enceinte d'élevage 5 voisine est lié par la liaison 13 à la barre métallique 17 à laquelle la première enceinte d'élevage est liée par le ou les liens souples 87. Ainsi, chaque barre métallique 17 est liée d'un côté par une liaison 13 à une enceinte d'élevage 5, et de l'autre côté par des liens souples 87 à une autre enceinte d'élevage.

On forme ainsi une ligne continue d'enceintes d'élevage 5. Les enceintes d'élevage 5 peuvent être retournées très aisément pour lutter contre l'encrassement. En effet, il est connu que des algues se développent plus facilement sur les faces des enceintes d'élevage qui sont tournées vers le haut, c'est-à-dire exposées au soleil. Par ailleurs, des ascidies se développent sur la face de l'enceinte d'élevage qui est à l'ombre, c'est-à-dire tournée vers le bas.

Pour retourner les enceintes d'élevage du dispositif de l'invention, il suffit de délier les liens 87 liant chaque enceinte d'élevage à la barre métallique 17 correspondante. On peut ensuite faire pivoter l'enceinte d'élevage 5 autour de l'autre barre métallique, à laquelle elle est liée par la liaison 13. Puis, le bord distal de l'enceinte est lié à une nouvelle barre métallique 17, par les liens élastiques qui sont restés en place.

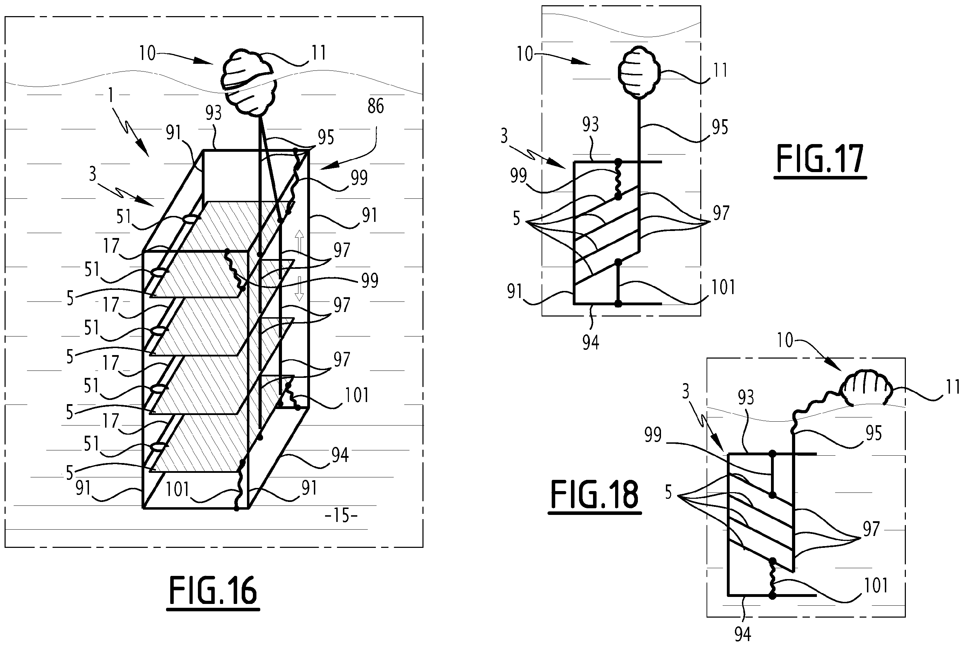

Un second mode de réalisation qui ne fait pas partie de l'invention va maintenant être décrit, en référence aux figures 16 à 19. Seuls les points par lesquels le second mode de réalisation se différencie du premier seront détaillés ci-dessous.

Dans le second mode de réalisation, toutes les enceintes d'élevage 5 du dispositif d'élevage 1 sont liées à un même dispositif flotteur 10.

Avantageusement, le châssis 3 comprend plusieurs barres métalliques 17 parallèles les unes aux autres, espacées les unes des autres au moins verticalement.

Par exemple, le châssis 3 comporte une structure parallélépipédique. Cette structure comporte quatre poteaux verticaux 91, ces poteaux étant de préférence solidarisés les uns aux autres par un cadre supérieur 93 et par un cadre inférieur 94. Les barres métalliques 17 sont rigidement fixées par leur extrémité opposée à deux des poteaux 91, et sont superposées suivant la direction verticale. Les barres métalliques 17 sont ainsi disposées sur une grande face du parallélépipède.

Une enceinte d'élevage 5 est liée à chaque barre métallique 17, les enceintes d'élevage 5 étant superposées les unes au-dessus des autres.

Les barres métalliques 17 sont régulièrement espacées les unes des autres suivant la direction verticale.

Les enceintes d'élevage 5 sont placées à l'intérieur du châssis, et débattent entre les poteaux 91.

Selon un exemple de réalisation, le dispositif flotteur 10 comporte un unique flotteur 11. Le dispositif flotteur 10 est lié par une liaison souple 95 à l'enceinte d'élevage 5 supérieure située le plus haut dans l'empilement d'enceintes d'élevage.

La liaison souple 95 est de tout type adapté. La liaison souple 95 comporte par exemple un ou plusieurs câbles, raccordant chacun le flotteur à l'enceinte. En variante, elle comporte des filins, des cordes, des chaînes, ou tout autre type de lien souple.

Des liaisons intermédiaires 97, typiquement des câbles ou des filins, relient chaque enceinte d'élevage 5 à l'enceinte d'élevage située immédiatement au-dessus et/ou à l'enceinte d'élevage située immédiatement en-dessous dans l'empilement. En variante, ces liaisons intermédiaires sont des entretoises rigides, qui pivotent par exemple autour des axes situés sur le bord distal des enceintes d'élevage. Dans certains cas, une liaison rigide peut être un facteur de cohésion du mouvement favorisant une agitation égale de l'ensemble des enceintes d'élevage. En effet, une liaison souple pourrait, en cas d'agitation à haute fréquence (clapot), favoriser, consécutivement à l'inertie de l'ensemble des enceintes d'élevage, l'agitation des enceintes d'élevage supérieures avec pour conséquence une agitation trop importante des animaux d'élevage des enceintes supérieures versus une agitation insuffisante des animaux d'élevage des enceintes inférieures.

Typiquement, la liaison souple 95 raccorde le dispositif flotteur 10 au bord distal 57 de l'enceinte d'élevage supérieure. Le ou les liaisons intermédiaires 97 raccordent entre eux les bords distaux des différentes enceintes d'élevage.

Le dispositif d'élevage selon le second mode de réalisation est conçu pour pouvoir être utilisé en eau profonde, c'est-à-dire dans une zone où les enceintes d'élevage 5 ne sont pas découvertes à marée basse.

Le châssis 3 repose sur le fond 15. Il est par exemple monté sur un pieu fiché dans le fond 15.

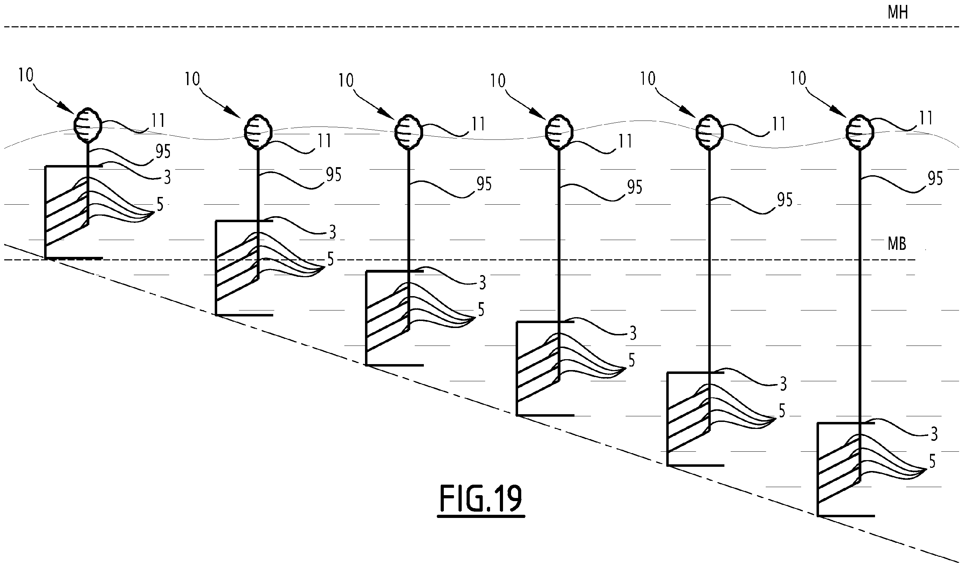

La longueur de la liaison souple 95 est choisie de telle sorte que le dispositif flotteur 10, quand la liaison souple est tendue, soit dans la zone de marnage, c'est-à-dire à un niveau compris entre le niveau de l'eau à marée basse (MB sur la figure 19) et le niveau de l'eau à marée haute (MH sur la figure 19). En d'autres termes, la longueur de la liaison souple est choisie pour que, à au moins un moment au cours du cycle de la marée, le dispositif flotteur 10 flotte à la surface de l'eau avec la liaison souple 95 tendue, de telle sorte que les déplacements de l'eau dus aux vagues soient transmis par le dispositif flotteur 10 et la liaison souple 95 à l'enceinte d'élevage 5 supérieure.

Les liaisons intermédiaires 97 sont choisies de longueurs telles que, quand l'enceinte 5 supérieure pivote vers le haut, elle entraine l'enceinte située immédiatement en-dessous d'elle, qui entraine elle-même l'enceinte immédiatement inférieure etc.

Typiquement, la longueur des liaisons intermédiaires 97 est choisie égale à l'écartement vertical entre les barres métalliques 17.

Dans l'exemple représenté, le flotteur est lié à l'enceinte d'élevage supérieure par deux câbles 95. Chaque enceinte d'élevage est liée à l'enceinte immédiatement au-dessus et/ou l'enceinte immédiatement au-dessous par deux liaisons intermédiaires 97.

Par ailleurs, le dispositif limiteur 86 comprend au moins un lien souple 99 liant l'enceinte d'élevage supérieure au châssis et limitant la course de ladite enceinte vers le bas. Dans l'exemple représenté, le dispositif limiteur 86 comprend deux liens souples 99 liant l'enceinte supérieure au châssis.

Par ailleurs, le dispositif limiteur 86 comprend au moins un lien souple 101 liant l'enceinte 5 inférieure, située en bas de l'empilement d'enceintes, au châssis et limitant la course de l'enceinte inférieure vers le haut. Dans l'exemple représenté, le dispositif limiteur 86 comprend deux liens souples 101 liant l'enceinte inférieure au châssis 3.

Il est à noter que les liens souples 101 pourraient ne pas être montés sur l'enceinte inférieure 101 mais être montés sur tout autre enceinte de l'empilement.

Le fonctionnement du dispositif d'élevage selon le second mode de réalisation va maintenant être décrit.

Quand la marée est haute, comme illustré sur la figure 17, le dispositif flotteur 10 est entièrement immergé, et se trouve à distance sous le niveau de l'eau. La liaison souple 95 est tendue. Les enceintes d'élevage 5 occupent leurs positions extrêmes hautes. Cette position est définie par le dispositif limiteur 86.

Dans l'exemple de réalisation décrit plus haut, cette position est définie par la longueur du ou des liens souples 101, qui sont tendus eux aussi.

Le dispositif flotteur 10 sollicite l'enceinte d'élevage supérieure 5 vers le haut, cette sollicitation étant transmise par chaque enceinte d'élevage 5 à l'enceinte d'élevage immédiatement inférieure à travers les liaisons intermédiaires 97.

Quand la mer se trouve à un niveau intermédiaire entre la marée haute et la marée basse, fonction de la longueur de la liaison souple 95, on rencontre la situation illustrée sur la figure 16. Le flotteur dispositif 10 flotte à la surface de l'eau, la liaison souple 95 étant tendue. Le déplacement vertical de l'eau créé par les vagues entraine un déplacement vertical du dispositif flotteur 10. Quand le dispositif flotteur 10 se déplace vers le haut, il entraine par le biais de la liaison souple 95 l'enceinte d'élevage 5 supérieure, qui entraine elle-même vers le haut par le biais des liaisons intermédiaires 97 les enceintes situées plus bas.

Ce mouvement vertical vers le haut est limité, le cas échéant, par le dispositif limiteur 86. Dans l'exemple de réalisation décrit plus haut, le mouvement vers le haut est limité par les liens souples 101.

Quand le niveau de l'eau descend, le dispositif flotteur 10 est entrainé vers le bas. Ceci donne du mou à la liaison souple 95, et les enceintes 5 sont entrainées vers le bas sous l'effet de leur propre poids. Le mouvement vers le bas de l'enceinte supérieure 5 est limité le cas échéant par le dispositif limiteur 86. Dans l'exemple de réalisation décrit plus haut, le mouvement vers le bas est limité par le ou les liens souples 99. Le mouvement vers le bas de chaque enceinte d'élevage 5 par rapport à l'enceinte supérieure est limité par la longueur des liaisons intermédiaires 97.

Quand la marée est basse, le dispositif d'élevage est dans la situation illustrée par la figure 18. Les enceintes d'élevage 5 sont dans leur position extrême basse, définie par le dispositif limiteur 86.

Dans l'exemple de réalisation décrit plus haut, cette position est définie par la longueur du ou des liens souples 99 et par la longueur des différentes liaisons intermédiaires 97. Le dispositif flotteur 10 flotte à la surface de l'eau. La liaison souple 95 n'est pas tendue.

Comme indiqué plus haut, le second mode de réalisation est particulièrement avantageux car il permet de disposer le dispositif d'élevage en eau profonde, à des endroits jamais découverts à marée basse. Il permet donc d'exploiter des zones qui ne sont pas utilisables avec le dispositif du premier mode de réalisation de l'invention.

Le niveau d'implantation du dispositif flotteur 10 par rapport à la hauteur du marnage, c'est-à-dire à la hauteur de l'eau à marée haute et à la hauteur de l'eau à marée basse, permet de choisir les conditions de fonctionnement du système.

Ainsi, comme décrit précédemment, le choix de la longueur de la liaison souple 95 permet d'adapter le dispositif aux conditions de marée. En effet, le marnage est caractérisé par deux paramètres : son amplitude, variable d'un jour à l'autre (par exemple en France les forts marnages alternent avec les faibles marnages sur une périodicité de 15 jours) et la vitesse de montée et de descente de l'eau qui par exemple suit la règle des douzièmes, ce qui signifie qu'au début ou à la fin de la marée descendante ou montante la vitesse de montée et de descente est trois fois plus lente qu'à mi-marée. En conséquence, selon l'implantation altimétrique du dispositif flotteur par rapport au marnage, on pourra soit obtenir dans la tranche supérieure des marnages de faible amplitude une agitation quotidienne sur une longue durée, soit obtenir dans la tranche inférieure des marnages de forte amplitude une agitation peu à très peu fréquente sur une longue durée, soit obtenir dans l'espace médiant du marnage une agitation plus ou moins fréquente et de plus courte durée.

Par ailleurs, l'amplitude des mouvements, et la durée des périodes d'agitation, peut également être réglée par le dispositif limiteur 86. Dans l'exemple de réalisation décrit plus haut, ce réglage est effectué en choisissant la longueur des liens souples 99 et 101.

Le second mode de réalisation peut être également appliqué avec des dispositifs d'élevage disposés sur l'estran, quand on souhaite mettre en mouvement une superposition d'enceintes et/ou travailler avec le même niveau de marée sur toute la surface de l'estran. Ceci permet à l'éleveur de faire des choix zootechniques : fréquence d'agitation, amplitude du mouvement, durée d'agitation.

Comme illustré sur la figure 19, plusieurs dispositifs tels que décrits à la figure 16 peuvent être disposés sur l'estran à différents niveaux de profondeur, les dispositifs flotteurs 10 des différents dispositifs étant réglés pour être placés sensiblement au même niveau. Ainsi, les liaisons souples 95 des différents dispositifs sont de longueurs variables, comme illustré sur la figure 19. Ces longueurs sont choisies pour que les liaisons souples respectives des différents dispositifs soient tendues pour sensiblement le même niveau d'eau.

Un troisième mode de réalisation, non représenté, va maintenant être décrit. Seuls les points par lesquels le troisième mode de réalisation diffère du premier mode de réalisation seront détaillés ci-dessous.

Dans le troisième mode de réalisation, le dispositif flotteur 10 n'est pas logé à l'intérieur de l'enceinte d'élevage. Au contraire, le dispositif flotteur 10 est placé à l'extérieur de l'enceinte d'élevage et est lié par une liaison souple 95 à l'enceinte d'élevage 5.

Comme dans le second mode de réalisation, la longueur de la liaison souple 95 est choisie de telle sorte que le dispositif flotteur 10, quand la liaison souple 95 est tendue, soit dans la zone de marnage
Les enceintes d'élevage 5 peuvent ainsi être disposées hors de l'estran, en eau profonde.

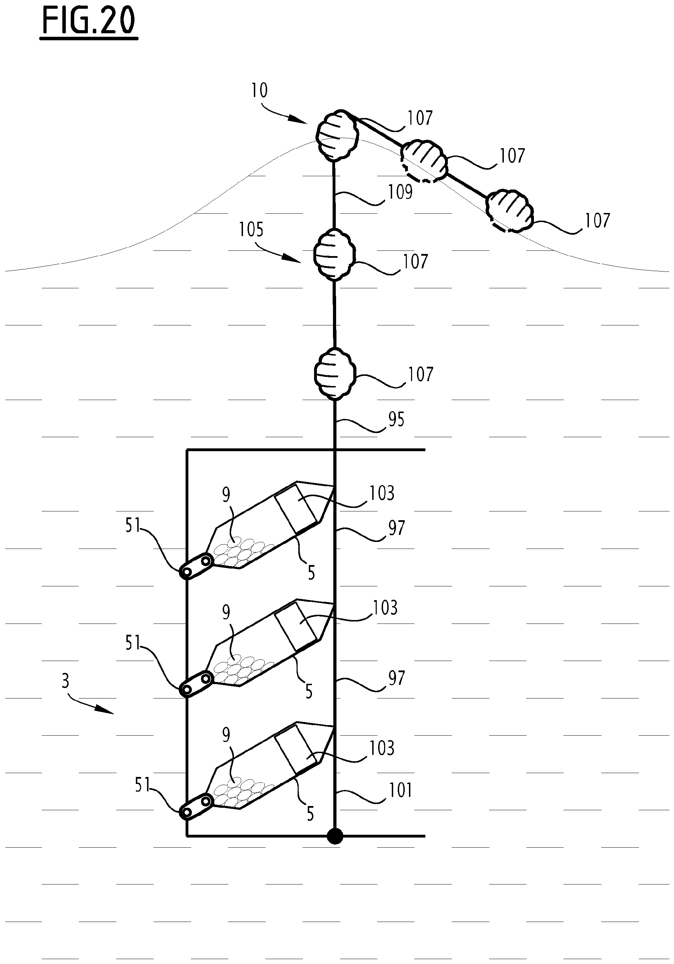

Il est à noter que, dans les second et troisième modes de réalisation, chaque enceinte d'élevage est en variante équipée de son propre flotteur 103, en plus du dispositif flotteur 10. Une telle situation est illustrée sur la figure 20. Les flotteurs 103 sont par exemple disposés dans les enceintes 5. Ils sont dimensionnés pour compenser au moins partiellement la masse d'animaux d'aquaculture en fin d'élevage. Ceci permet de limiter la flottabilité du dispositif flotteur 10 nécessaire au mouvement, et donc les efforts transmis par le dispositif flotteur 10 implanté dans l'intervalle du marnage en cas de tempête par exemple. Cet aspect est très important car l'effet cumulé des flotteurs selon leur nombre, leur disposition et leur volume, laisse à l'éleveur la possibilité de déterminer définitivement le montage idéal parfaitement adapté à son site en eau profonde, sachant que les conditions hydrodynamiques sont invariables, tout en tenant compte des risques tempétueux, et donc de lui permettre d'obtenir de manière constante et régulière la qualité de produit qu'il aura choisie.

Selon une autre variante de réalisation applicable aux second et troisième modes de réalisation, le dispositif flotteur 10 comprend non pas un unique flotteur mais une guirlande 105 de flotteurs. Un tel agencement est illustré sur la figure 20. Cette guirlande 105 comporte une pluralité de flotteurs 107, montés les uns derrière les autres le long d'un lien souple 109, dont une extrémité inférieure est solidaire de la liaison souple 95.

Avantageusement, le volume, et donc la flottabilité, des flotteurs 107 augmente de l'extrémité supérieure à l'extrémité inférieure du lien souple 109.

Un tel agencement permet une action progressive, plus douce et plus longue dans l'intervalle du marnage choisi.

Cette variante peut être combinée avec la précédente (flotteur 103 propre à chaque enceinte en plus du dispositif flotteur 10).

Selon une variante applicable à tous les modes de réalisation, la liaison 13 n'est pas montée sur le bord proximal de chaque enceinte d'élevage 5. Si on considère le plan médian de l'enceinte d'élevage 5, perpendiculaire au fond inférieur et parallèle aux axes de rotation R1 et R2, la liaison 13 peut lier tout point situé d'un côté de ce plan médian au châssis 3. Le flotteur 11 est de préférence lié à tout point situé de l'autre côté du plan médian.

De même, les liens souples peuvent être liés à tout point de l'enceinte situé du côté du plan médian opposé à la liaison 13.

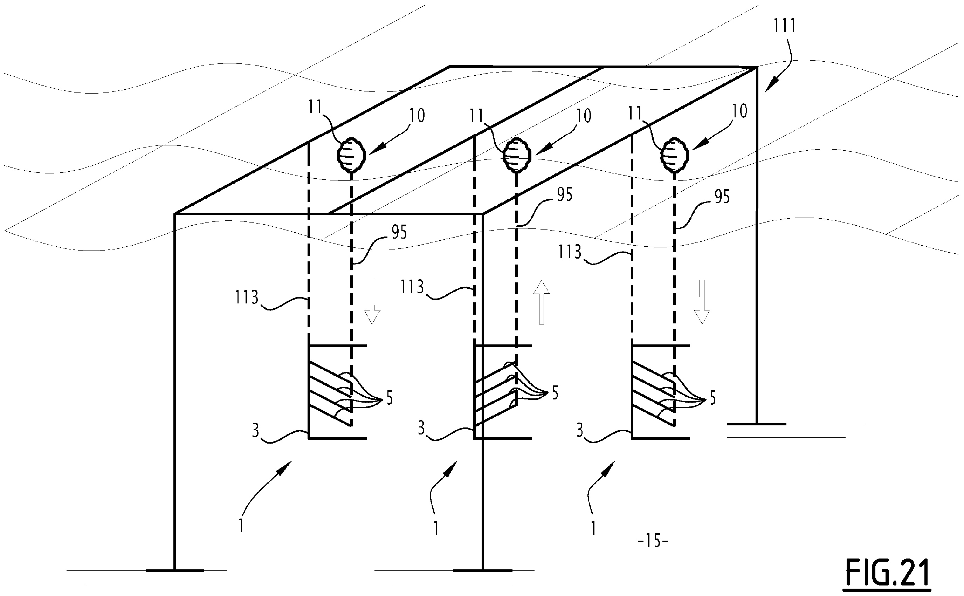

Une autre variante de réalisation va maintenant être décrite, en référence à la figure 21. Elle est applicable à tous les modes de réalisation décrits précédemment.

Dans cette variante de réalisation, le châssis 3 ne repose pas directement sur le fond marin 15. Le châssis 3 est situé un peu au-dessus du fond marin 15. Il est monté par exemple sur une structure porteuse 111, qui repose fixement sur le fond marin 15.

La structure porteuse 111 est de tout type adapté : table, portique, ...

Elle est rigidement fixée sur le fond marin, ou au contraire est seulement lestée de manière à rester en place du fait de son poids propre.

La structure porteuse 111 porte un ou plusieurs dispositifs d'élevage 1. Chaque châssis 3 est monté sur la structure porteuse 111 par tout moyen adapté : barres métalliques rigides 113, soudures directes, câbles métalliques flexibles, etc...

Selon une variante de réalisation, applicable à tous les modes de réalisation décrits précédemment, les enceintes sont de simples poches ou des cages, fixées sur des plateaux liés au châssis par la liaison 13. Les plateaux, avec les enceintes, peuvent effectuer le mouvement à double rotation décrit plus haut.

Selon une variante de réalisation, le dispositif limiteur 86 comporte des butées fixes en remplacement ou en plus des liens souples 87, 99, 101.

Ces butées fixes sont rigidement fixées au châssis 3. Certaines butées limitent la course de la ou chaque enceinte d'élevage 5 par rapport au châssis 3 vers le haut, et d'autres butées limitent la course de la ou chaque enceinte d'élevage 5 par rapport au châssis 3 vers le bas.

Dans le second mode de réalisation, les butées sont avantageusement des barres métalliques rigidement fixées au châssis, au-dessus et en-dessous de l'empilement d'enceintes d'élevage.

Un tel agencement est particulièrement bien adapté à la variante de réalisation où les enceintes d'élevage sont fixées sur des plateaux liés au châssis par la liaison 13, comme indiqué ci-dessus.

Il est à noter que l'association de quatre aspects techniques complémentaires permet d'obtenir des résultats particulièrement intéressants. Ces quatre aspects contribuent à transférer de manière très efficace aux animaux d'aquaculture un mouvement de cisaillement qui permet de les faire rouler sur une surface et les unes contre les autres de façon à obtenir une limitation de la croissance par rupture séquentielle de la dentelle se concrétisant par un fort engraissement, une propreté et une forme de coquille irréprochables.

Ces quatre aspects techniques sont les suivants.
1. L'utilisation d'une enceinte présentant une surface étendue et plane d'élevage des animaux d'aquaculture.
2. L'utilisation d'un dispositif flotteur lié directement ou indirectement à l'enceinte qui suit le niveau de la mer quand la marée est au niveau du dispositif flotteur, transférant à l'enceinte une variation d'inclinaison du haut vers le bas et du bas vers le haut quand la mer monte et descend, de façon que les animaux d'aquaculture dévalent sur la surface d'élevage ; l'enceinte le cas échéant suit aussi le mouvement ondulatoire des vagues, démultipliant ainsi le mouvement précédent et, le cas échéant lorsque l'enceinte elle-même émerge, créant, grâce à sa surface inférieure ainsi disposée à l'interface air/eau subissant l'effet de la vague venant frapper le dessous de l'enceinte, un effet de lavage par l'eau giclant en surpression à travers les mailles de l'enceinte (effet de soufflage des vagues bien connu dans les cavités rocheuses en bord de mer). Cet effet est particulièrement fort quand l'enceinte présente une surface inférieure large et plate, selon un mode de réalisation privilégié de l'invention.
3. L'utilisation d'une fixation venant se fixer sur deux axes, l'un sur l'enceinte et l'autre sur le support de l'enceinte, formant ainsi une bielle qui convertit le mouvement ascendant/descendant créé par le dispositif flotteur en un mouvement de cisaillement favorisant, à la faveur de leur inertie, le déplacement des animaux d'aquaculture sur la surface plane de l'enceinte ; ceci favorise le décollement des animaux d'aquaculture recollés sur l'enceinte par nacration pendant les périodes de marée sans agitation des enceintes.
4. L'utilisation d'un dispositif limiteur permettant de limiter l'amplitude verticale du mouvement ascendant/descendant dû au dispositif flotteur pour limiter les effets précédents en fonction des besoins zootechniques.

Il existe une synergie entre ces aspects techniques, permettant d'atteindre des résultats particulièrement bons.

Toutefois, il n'est pas nécessaire de mettre en oeuvre conjointement ces quatre aspects techniques. Dans la présente invention, les aspects 2. et 3. sont revendiqués conjointement et permettent d'obtenir d'excellents résultats pour l'agitation des animaux d'aquaculture. La mise en oeuvre de l'aspect 1, en plus des aspects 2. et 3, améliore encore les résultats.

## Revendications

1. Dispositif d'élevage en mer de coquillages, le dispositif (1) comprenant :
- un châssis (3) ;
- au moins une enceinte d'élevage (5) délimitant intérieurement un volume (7) de réception pour les coquillages (9);
- un dispositif flotteur (10) lié à ladite au moins une enceinte d'élevage (5) ;
- une liaison (13) de ladite au moins une enceinte d'élevage (5) au châssis (3), autorisant une rotation de ladite au moins une enceinte d'élevage (5) autour d'un premier axe de rotation (R1) sensiblement horizontal, et une rotation du premier axe de rotation (R1) par rapport au châssis (3) autour d'un second axe de rotation (R2) sensiblement parallèle au premier axe de rotation (R1),
dans lequel la liaison (13) comporte au moins un organe de liaison (51) de type bielle, monté pivotant sur ladite au moins une enceinte d'élevage (5) autour du premier axe de rotation (R1) et monté pivotant sur le châssis (3) autour du second axe de rotation (R2), configuré pour transformer un mouvement vertical de la mer en un mouvement vertical et horizontal de l'au moins une enceinte d'élevage (5) qui crée un effort de cisaillement au niveau du contact entre les coquillages (9) et l'au moins une enceinte d'élevage (5), ladite au moins une enceinte d'élevage (5) comprenant une zone de butée (85) coopérant avec ledit au moins un organe de liaison (51) de manière à limiter le débattement en rotation de ladite au moins une enceinte d'élevage (5) par rapport audit au moins un organe de liaison (51) autour du premier axe de rotation (R1).

2. Dispositif selon la revendication 1, dans lequel le châssis (3) comporte au moins une barre métallique (17), la liaison (13) comportant un manchon (53) fixé à la barre métallique (17) autour duquel ledit au moins un organe de liaison (51) est monté pivotant.

3. Dispositif selon la revendication 1 ou 2, dans lequel ledit au moins un organe de liaison (51) comporte deux demi-pinces (59) indépendantes, susceptibles d'être montées sur ladite au moins une enceinte d'élevage (5) dans une position ouverte stable dans laquelle les demi-pinces (59) sont liées l'une à l'autre par une liaison pivot (77) agencée pour permettre de refermer les demi-pinces (59) autour du châssis (3).

4. Dispositif selon l'une quelconque des revendications précédentes, dans lequel ladite au moins une enceinte d'élevage (5) présente un bord proximal (55) et un bord distal (57) opposés l'un à l'autre, la liaison (13) liant le bord proximal (55) au châssis (3).

5. Dispositif selon la revendication 4, dans lequel le dispositif flotteur (10) est lié à une zone de ladite au moins une enceinte d'élevage (5) située à proximité du bord distal (57).

6. Dispositif selon l'une des quelconques revendications précédentes, dans lequel un dispositif limiteur (86) limite le débattement de l'enceinte d'élevage (5) par rapport au châssis (3) selon la direction verticale.

7. Dispositif selon la revendication 6 combiné à la revendication 4 ou 5, dans lequel le dispositif limiteur (86) comprend au moins un lien souple (87) qui lie le châssis (3) au bord distal (57) de l'enceinte d'élevage (5).

8. Dispositif selon la revendication 7, dans lequel le châssis (3) comprend plusieurs barres métalliques (17) parallèles les unes aux autres et espacées les unes des autres au moins horizontalement, le dispositifs d'élevage (1) comprenant plusieurs enceintes d'élevage (5) chacune disposée entre deux des barres métalliques (17), le bord proximal (55) de ladite enceinte d'élevage (5) étant lié par la liaison (13) à l'une des deux barres métalliques (17), le bord distal (57) de l'enceinte d'élevage (5) étant lié par le lien (87) à l'autre des deux barres métalliques (17).

9. Dispositif selon l'une quelconque des revendications précédentes, dans lequel ladite au moins une enceinte d'élevage (5) présente un fond inférieur (23) sensiblement plat, parallèle aux premier et second axes de rotation (R1, R2).

10. Dispositif selon la revendication 9, dans lequel ladite au moins une enceinte d'élevage (5) présente un fond supérieur (25) sensiblement plat, parallèle et opposé au fond inférieur (23).

11. Dispositif selon la revendication 10, dans lequel les fonds inférieur et supérieur (23, 25) présentent entre eux un écartement, les fonds inférieur et supérieur (23, 25) présentant chacun une longueur et une largeur supérieure à 3 fois ledit écartement.

12. Dispositif selon la revendication 10 ou 11, dans lequel ladite au moins une enceinte d'élevage (5) comprend deux demi-enceintes (27), l'une définissant le fond inférieur (23) et l'autre le fond supérieur (25), fixées l'une à l'autre, de préférence par des goupilles.

13. Dispositif selon la revendication 12, dans lequel les deux demi-enceintes (27) sont identiques l'une à l'autre, les deux demi-enceintes (27) étant de préférence emboîtables l'une dans l'autre.

14. Dispositif selon l'une quelconque des revendications 12 à 13, dans lequel chaque demi-enceinte (27) comporte des crochets (37) et des orifices (39) de réception des crochets (37) de l'autre demi-enceinte (27), les crochets (37) d'une des demi-enceintes (27) étant prévus pour être engagés dans les orifices (39) de l'autre demi-enceinte (27) selon un mouvement sensiblement perpendiculaire aux fonds supérieur et inférieur (23, 25) et pour être mis en prise autour des bords desdits orifices (39) par translation de ladite une des demi-enceinte (27) par rapport à ladite autre des demi-enceintes (27) selon une direction longitudinale.

15. Dispositif selon la revendication 14, dans lequel les deux demi-enceintes (27) sont bloquées en translation l'une par rapport à l'autre suivant la direction longitudinale par au moins un organe de blocage engagé dans des fentes des deux demi-enceintes (27), par exemple une goupille.

## Patentansprüche

1. Vorrichtung zur Aufzucht von Muscheln im Meer, die Vorrichtung (1) umfassend:
- einen Rahmen (3);
- mindestens eine Aufzuchtkammer (5), die innen ein Aufnahmevolumen (7) für die Muscheln (9) begrenzt;
- eine Schwimmervorrichtung (10), die mit der mindestens einen Aufzuchtkammer (5) verbunden ist;
- eine Verbindung (13) der mindestens einen Aufzuchtkammer (5) mit dem Rahmen (3), die eine Drehung der mindestens einen Aufzuchtkammer (5) um eine erste, im Wesentlichen horizontale Drehachse (R1) und eine Drehung der ersten Drehachse (R1) in Bezug auf den Rahmen (3) um eine zweite Drehachse (R2), die im Wesentlichen parallel zur ersten Drehachse (R1) ist, zulässt,
wobei die Verbindung (13) mindestens ein Verbindungselement (51) vom Typ Pleuelstange umfasst, das schwenkbar um die erste Drehachse (R1) an der mindestens einen Aufzuchtkammer (5) montiert ist und schwenkbar um die zweite Drehachse (R2) an dem Rahmen (3) montiert ist, die konfiguriert ist, um eine vertikale Bewegung des Meers in eine vertikale und horizontale Bewegung der mindestens einen Aufzuchtkammer (5) umzuwandeln, die eine Scherkraft auf Ebene des Kontakts zwischen den Muscheln (9) und der mindestens einen Aufzuchtkammer (5) erzeugt, die mindestens eine Aufzuchtkammer (5) umfassend einen Anschlagbereich (85), der mit dem mindestens einen Verbindungselement (51) zusammenwirkt, um den Drehausschlag der mindestens einen Aufzuchtkammer (5) in Bezug auf das mindestens eine Verbindungselement (51) um die erste Drehachse (R1) zu begrenzen.

2. Vorrichtung nach Anspruch 1, wobei das Rahmen (3) mindestens eine Metallstange (17) aufweist, wobei die Verbindung (13) eine an der Metallstange (17) befestigte Hülse (53) umfasst, um die das mindestens eine Verbindungselement (51) schwenkbar montiert ist.

3. Vorrichtung nach Anspruch 1 oder 2, wobei das mindestens eine Verbindungselement (51) zwei unabhängige Halbklammern (59) umfasst, die an der mindestens einen Aufzuchtkammer (5) in einer stabilen offenen Position montiert werden können, wobei die Halbklammern (59) durch eine Schwenkverbindung (77) miteinander verbunden sind, die angeordnet ist, um zu ermöglichen, dass die Halbklammern (59) um den Rahmen (3) herum geschlossen werden.

4. Vorrichtung nach einem der vorherigen Ansprüche, wobei die mindestens eine Aufzuchtkammer (5) einen proximalen Rand (55) und einen distalen Rand (57) aufweist, die einander gegenüber sind, wobei die Verbindung (13) den proximalen Rand (55) mit dem Rahmen (3) verbindet.

5. Vorrichtung nach Anspruch 4, wobei die Schwimmervorrichtung (10) mit einem Bereich der mindestens einen Aufzuchtkammer (5) verbunden ist, der sich in der Nähe des distalen Rands (57) befindet.

6. Vorrichtung nach einem der vorherigen Ansprüche, wobei eine Begrenzungsvorrichtung (86) die Auslenkung der Aufzuchtkammer (5) in Bezug auf den Rahmen (3) in vertikaler Richtung begrenzt.

7. Vorrichtung nach Anspruch 6 in Kombination mit Anspruch 4 oder 5, wobei die Begrenzungsvorrichtung (86) mindestens eine flexible Verbindung (87) umfasst, die den Rahmen (3) mit dem distalen Rand (57) der Aufzuchtkammer (5) verbindet.

8. Vorrichtung nach Anspruch 7, wobei der Rahmen (3) eine Vielzahl von Metallstangen (17) umfasst, die parallel zueinander und zumindest horizontal voneinander beabstandet sind, die Aufzuchtvorrichtungen (1) umfassend eine Vielzahl von Aufzuchtkammern (5), die jeweils zwischen zwei der Metallstangen (17) angeordnet sind, wobei der proximale Rand (55) der Aufzuchtkammer (5) durch die Verbindung (13) mit einer der zwei Metallstangen (17) verbunden ist, wobei der distale Rand (57) der Aufzuchtkammer (5) durch die Verbindung (87) mit der anderen der zwei Metallstangen (17) verbunden ist.

9. Vorrichtung nach einem der vorherigen Ansprüche, wobei die mindestens eine Aufzuchtkammer (5) einen im Wesentlichen flachen unteren Boden (23) parallel zu der ersten und der zweiten Drehachse (R1, R2) aufweist.

10. Vorrichtung nach Anspruch 9, wobei die mindestens eine Aufzuchtkammer (5) einen im Wesentlichen flachen oberen Boden (25) parallel und gegenüber dem unteren Boden (23) aufweist.

11. Vorrichtung nach Anspruch 10, wobei der untere und der obere Boden (23, 25) untereinander einen Abstand aufweisen, wobei der untere und der obere Boden (23, 25) jeweils eine Länge und eine Breite aufweisen, die größer sind als das Dreifache des Abstands.

12. Vorrichtung nach Anspruch 10 oder 11, wobei die mindestens eine Aufzuchtkammer (5) zwei Halbkammern (27) umfasst, wovon eine den unteren Boden (23) und die andere den oberen Boden (25) definiert und die aneinander befestigt sind, vorzugsweise mit Stiften.

13. Vorrichtung nach Anspruch 12, wobei die zwei Halbkammern (27) identisch zueinander sind, wobei die zwei Halbkammern (27) vorzugsweise ineinander eingreifbar sind.

14. Vorrichtung nach einem der Ansprüche 12 bis 13, wobei jede Halbkammer (27) Haken (37) und Öffnungen (39) zum Aufnehmen der Haken (37) der anderen Halbkammer (27) umfasst, wobei die Haken (37) einer der Halbkammern (27) bereitgestellt sind, um in die Öffnungen (39) der anderen Halbschale (27) gemäß einer Bewegung im Wesentlichen senkrecht zu dem oberen und dem unteren Boden (23, 25) einzugreifen und um die Ränder der Öffnungen (39) durch Translation der einen Halbkammer (27) in Bezug auf die andere der Halbkammern (27) in einer Längsrichtung in Eingriff gebracht zu werden.

15. Vorrichtung nach Anspruch 14, wobei die zwei Halbkammern (27) durch mindestens ein in Schlitze der zwei Halbkammern (27) eingreifendes Arretierelement, z. B. einen Stift, gegen eine Translation in Bezug aufeinander in Längsrichtung arretiert sind.

## Claims

1. A device for rearing shellfish at sea, the device (1) comprising:
- a frame (3);
- at least one rearing enclosure (5) internally delimiting a reception volume (7) for shellfish (9);
- a float device (10) connected to said at least one rearing enclosure (5);
- a connection (13) of the said at least one rearing enclosure (5) to the frame (3), allowing rotation of the said at least one rearing enclosure (5) about a first substantially horizontal axis of rotation (R1), and rotation of the first axis of rotation (R1) relative to the frame (3) about a second axis of rotation (R2) substantially parallel to the first axis of rotation (R1),
in which the link (13) comprises at least one link member (51) of the connecting rod type, mounted so as to pivot on the said at least one rearing enclosure (5) about the first axis of rotation (R1) and mounted so as to pivot on the frame (3) about the second axis of rotation (R2), configured so as to transform a vertical movement of the sea into a vertical and horizontal movement of the at least one rearing enclosure (5) which creates a shearing force at the level of the contact between the shellfish (9) and the at least one rearing enclosure (5), the said at least one rearing enclosure (5) comprising a stop zone (85) cooperating with the said at least one connecting member (51) so as to limit the rotational movement of the said at least one rearing enclosure (5) with respect to the said at least one connecting member (51) about the first axis of rotation (R1).

2. A device according to claim 1, in which the frame (3) comprises at least one metal bar (17), the link (13) comprising a sleeve (53) fixed to the metal bar (17) around which said at least one link member (51) is pivotally mounted.

3. A device according to claim 1 or 2, in which said at least one connecting member (51) comprises two independent half-clips (59), capable of being mounted on said at least one lifting enclosure (5) in a stable open position in which the half-clips (59) are connected to each other by a pivot connection (77) arranged to allow the half-clips (59) to be closed around the frame (3).

4. A device according to any one of the preceding claims, wherein said at least one rearing enclosure (5) has a proximal edge (55) and a distal edge (57) opposite each other, the connection (13) linking the proximal edge (55) to the frame (3).

5. A device as claimed in claim 4, wherein the float device (10) is bonded to an area of said at least one rearing enclosure (5) located in the vicinity of the distal edge (57).

6. A device according to any of the preceding claims, in which a limiting device (86) limits the movement of the rearing enclosure (5) relative to the frame (3) in the vertical direction.

7. A device as claimed in claim 6 in combination with claim 4 or 5, wherein the limiting device (86) comprises at least one flexible link (87) which connects the frame (3) to the distal edge (57) of the rearing enclosure (5).

8. A device according to claim 7, in which the frame (3) comprises a plurality of metal bars (17) parallel to one another and spaced apart from one another at least horizontally, the rearing device (1) comprising a plurality of rearing enclosures (5) each arranged between two of the metal bars (17), the proximal edge (55) of said rearing enclosure (5) being connected by the link (13) to one of the two metal bars (17), the distal edge (57) of the rearing enclosure (5) being connected by the link (87) to the other of the two metal bars (17).

9. A device according to any one of the preceding claims, in which said at least one rearing enclosure (5) has a substantially flat bottom (23) parallel to the first and second axes of rotation (R1, R2).

10. A device as claimed in claim 9, in which said at least one rearing enclosure (5) has a substantially flat upper base (25) parallel to and opposite the lower base (23).

11. A device according to claim 10, in which the lower and upper ends (23, 25) have a gap between them, the lower and upper ends (23, 25) each having a length and width greater than 3 times said gap.

12. A device according to claim 10 or 11, in which said at least one rearing enclosure (5) comprises two half-enclosures (27), one defining the lower base (23) and the other the upper base (25), fixed to each other, preferably by pins.

13. A device as claimed in claim 12, in which the two half-enclosures (27) are identical to each other, the two half-enclosures (27) preferably being nestable inside each other.

14. Device according to any one of claims 12 to 13, in which each half-enclosure (27) comprises hooks (37) and orifices (39) for receiving the hooks (37) of the other half-enclosure (27), the hooks (37) of one of the half-enclosures (27) being designed to be engaged in the orifices (39) of the other half-enclosure (27) in a movement substantially perpendicular to the upper and lower ends (23, 25) and to be engaged around the edges of the said orifices (39) by translation of the said one of the half-enclosures (27) with respect to the said other of the half-enclosures (27) in a longitudinal direction.

15. A device as claimed in claim 14, in which the two half-shells (27) are locked against translation relative to one another in the longitudinal direction by at least one locking member engaged in slots in the two half-shells (27), for example a pin.
